(19) Europäisches Patentamt
European Patent Office
Office européen des brevets

(11) EP 4 781 874 A2

# (12) EUROPEAN PATENT APPLICATION

(43) Date of publication:
**29.07.2026 Bulletin 2026/31**

(21) Application number: **26185195.0**

(22) Date of filing: **26.06.2020**

(51) International Patent Classification (IPC):
***A47J 31/42*** *(2006.01)*

(52) Cooperative Patent Classification (CPC):
**A47J 42/40;** A47J 31/42

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.06.2019 AU 2019902301**

(62) Document number(s) of the earlier application(s) in accordance with Art. 76 EPC:
**20832203.2 / 3 989 784**

(71) Applicant: **Breville Pty Limited**
**Alexandria, NSW 2015 (AU)**

(72) Inventors:
- **HELLMERS, Duncan Bruce**
  **Alexandria, 2015 (AU)**
- **MCCLEAN, Stephen John**
  **Alexandria, 2015 (AU)**
- **THIE, Johnson**
  **Alexandria, 2015 (AU)**

(74) Representative: **Marks & Clerk LLP**
**15 Fetter Lane**
**London EC4A 1BW (GB)**

Remarks:
This application was filed on 15-06-2026 as a divisional application to the application mentioned under INID code 62.

## (54) GROUND COFFEE DOSING AND PACKING

(57) The invention relates to coffee packing and dosing devices and machines and more particularly to a portafilter dosing tools used to control the amount, distribution and/or packing of ground coffee within the filter basket of a portafilter prior to extraction. In one aspect the invention provides a device for vibrating the filter basket to vibrate coffee grounds therein to promote levelling and devoiding prior to tamping. In other aspects the invention provides machines and methods for filling a coffee filter basket with tamped ground coffee to a target level. In still other aspect the invention provides a tool for manually administering a uniform tamping force to coffee during tamping.

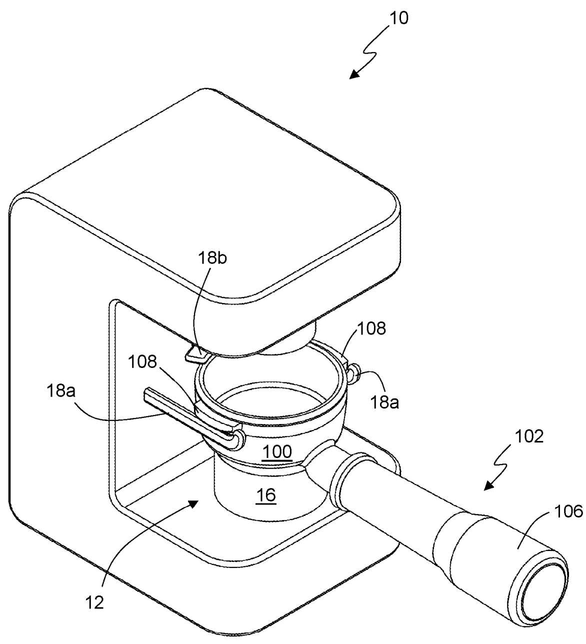


Figure 1

EP 4 781 874 A2

## Description

### Reference to Related Patent Application(s)

This application claims priority to Australian Provisional Patent Application No. 2019902301, filed 28 June 2019, hereby incorporated by reference in its entirety as if fully set forth herein.

### Field

The invention relates to coffee packing and dosing devices and machines and more particularly to a portafilter dosing tools used to control the amount, distribution and/or packing of ground coffee within the filter basket of a portafilter prior to extraction.

### Background

Espresso coffee is made by passing hot water, under pressure, through coffee grounds during an extraction process. Conventionally, the coffee grinds are carried in a portafilter that attaches onto the group head of an espresso making machine. The portafilter includes a head having a filter basket that carries a quantity or dose of ground coffee packed into a compartment with a perforated floor that acts as a filter and a handle for gripping by the user. In some portafilters, the filter basket is removable.

The quality and characteristics of the espresso coffee produced is known to be significantly affected by a number of variables including the water volume, temperature and pressure; the coarseness, uniformity and quantity, or 'dose' of the ground coffee and the density and distribution of the coffee grounds through which the hot, high-pressure water is forced.

It is known that using traditional machines, making quality coffee consistently is complicated and requires skill and experience. Such skill and experience may not be readily attainable particularly in a domestic setting.

For instance, in order to improve the flavour of the coffee, the grounds are compacted or compressed into the basket to form a coffee 'puck' in a process known as tamping which retards the flow of hot water through the grounds, allowing for higher extraction pressures. However, if the coffee grounds are not uniformly dense / distributed within the basket, during the extraction phase, the pressurized water will find the least resistant path though the coffee puck and may bypass portions of the coffee leading to both wastage of coffee and poor-quality coffee.

Furthermore, the amount of coffee added into the portafilter is important to the producing quality and consistent coffee beverages. Thus, the fill height of tamped coffee in the filter basket is an important parameter in the preparation of an espresso.

According tools have been developed to assist with making coffee in a consistent manner. For instance, automated coffee machines have been developed which seek to transfer particular tasks of coffee making from the user to the machine. For instance, the applicant's prior PCT patent application published as WO 2014/165905 proposes a device to grind and tamp coffee which is at least partially automated, whilst various tools, such as those mentioned in US 7992486 and US8240244 are proposed to pack and dose the portafilter basket. However, it is desirable to further automate the grinding, filling and tamping to enhance coffee consistency.

It is an object of the present invention to overcome or ameliorate at least one of the disadvantages of the prior art, or to provide a useful alternative.

### Summary of Invention

In a first aspect there is provided a device for packing ground coffee in a coffee filter basket, the device comprising:

a dock for receiving the filter basket to be packed with ground coffee;
an agitator associated with the dock to agitate the filter basket and thereby distribute the ground coffee within the filter basket.

In certain embodiments the agitator comprises a vibrator having a vibrating member connected to the dock. Preferably the vibrating member comprises an eccentric rotating mass vibrator.

Preferably, the vibrator comprises a motor for driving the vibrating member though an off-center coupling. More preferably the drive shaft of the motor is vertically orientated.

In certain embodiments the off-center coupling comprises a cam connected to a drive shaft driven by the motor.

In certain embodiments the off-center coupling comprises a bearing disposed between the cam and the dock to allow free rotation of the cam with respect to the dock.

In certain embodiments the vibrator is configured to agitate the filter basket on a generally horizontal plane.

In certain embodiments the vibrator is configured to generate vibrations having an amplitude of between around 0.1mm and 1mm, preferably around 0.25mm.

In certain embodiments the vibrator is configured to generate vibrations having a frequency of between around 2000 and 5000rpm, preferably around 3500rpm.

In certain embodiments the agitator comprises a linear actuator. Preferably the agitator comprises an electromechanical solenoid.

In certain embodiments, the device comprises a grinder for grinding coffee beans and directing ground

coffee into the filter basket when the filter basket is located in the dock and/or a coffee tamping assembly for tamping coffee in the filter basket.

Preferably, the filter basket is a filter basket of a coffee machine portafilter.

Preferably, the dock and portafilter include complementary bayonet formations for connecting the portafilter to the dock.

Preferably, the dock comprises a platform and the dock and the portafilter include complementary formations for connecting the portafilter to the platform.

In another embodiment there is provided a machine for filling a coffee filter basket with tamped ground coffee, the machine comprising:

a dock for receiving the filter basket to be packed with ground coffee;
a ground coffee metering device for metering ground coffee into the filter basket when the filter basket is located in the dock;
a tamping assembly for tamping coffee in the filter basket, the tamping assembly having:

a tamping head including a tamping surface;
a tamping actuator for moving the tamping surface along a tamping path aligned with the dock and to apply a tamping pressure to the ground coffee in the filter basket; and
means to gather displacement data indicative of the displacement of the tamping surface on the tamping path;

a controller operatively connected to the metering device and the tamping assembly and adapted to:

meter a first dose of ground coffee into the filter basket with the metering device;
determine the displacement of the tamping surface along the tamping path upon application of a tamping pressure by the tamping assembly;
calculate a tamp height value indicative of an actual tamp height of tamped coffee in the filter basket based on the displacement of the tamping surface;
calculate a variation amount of coffee powder required to be added to or removed from the filter basket based on the difference between the actual tamp height value and a predetermined range of target tamp height values;
meter the variation amount of coffee powder into the filter basket with the metering device if the actual tamp height value is less than the predetermined range of target tamp height values.

In certain embodiments, the first dose is estimated to provide a target tamp height of tamped coffee in the filter basket based on known filter basket parameters.

Preferably, the controller is adapted to determine a calibration parameter based on the difference between the actual tamp height value and the predetermined range of target tamp height values and wherein the calibration parameter is used to calibrate the ground coffee metering device.

Preferably, the machine comprises an agitator associated with the dock to agitate the filter basket and thereby distribute the ground coffee within the filter basket. More preferably, the agitator is operatively connected to the controller for agitating the coffee in the filter basket prior to tamping.

Preferably, the agitator comprises a vibrator having a vibrating member connected to the dock.

In certain embodiments, the metering device comprises a coffee bean grinder for grinding coffee beans into ground coffee.

Preferably, the grinder comprises a hopper for storage and supply of coffee beans to be ground, a grinding mechanism driven by an electric motor for grinding the coffee beans and a grinder outlet for directing ground coffee into the filter basket.

Preferably, the filter basket is a filter basket of a coffee machine portafilter.

Preferably, the dock and portafilter include complementary bayonet formations for connecting the portafilter to the dock.

Preferably, the dock comprises a platform and the dock and the portafilter include complementary attachment formations for connecting the portafilter to the platform.

In a third aspect there is provided a method of filing a coffee filter basket with tamped ground coffee by a machine, said machine comprising:

a dock for receiving the filter basket to be packed with ground coffee;
a ground coffee metering device for metering ground coffee into the filter basket when the filter basket is located in the dock;
a tamping assembly for tamping coffee in the filter basket, the tamping assembly having:

a tamping head including a tamping surface;
a tamping actuator for moving the tamping surface along a tamping path aligned with the dock and to apply a tamping pressure to the ground coffee in the filter basket; and
means to gather displacement data indicative of the displacement of the tamping surface on the tamping path;

a controller operatively connected to the metering device and the tamping assembly;
said method including the steps of:

metering a first dose of ground coffee into the filter basket with a ground coffee metering device;

determining the displacement of the tamping surface along the tamping path upon application of a tamping pressure by the tamping assembly;
calculating a tamp height value indicative of an actual tamp height of tamped coffee in the filter basket based on the displacement of the tamping surface;
determining the difference between the actual tamp height value and a predetermined range of target tamp height values; and
calculating a variation amount of coffee powder required to be added to or removed from the filter basket based on the difference between the actual tamp height value and a predetermined range of target tamp height values;
metering the variation amount of coffee powder into the filter basket with the metering device if the actual tamp height value is less than the predetermined range of target tamp height values.

In certain embodiments, the first dose is estimated to provide a target tamp height of tamped coffee in the filter basket based on known filter basket parameters.
Preferably, the controller is adapted to determine a calibration parameter based on the difference between the actual tamp height value and the predetermined range of target tamp height values and wherein the calibration parameter is used to calibrate the ground coffee metering device.
Preferably, the machine comprises an agitator associated with the dock to agitate the filter basket and thereby distribute the ground coffee within the filter basket. More preferably, the agitator is operatively connected to the controller for agitating the coffee in the filter basket prior to tamping.
Preferably, the agitator comprises a vibrator having a vibrating member connected to the dock.
In certain embodiments, the metering device comprises a coffee bean grinder for grinding coffee beans into ground coffee.
Preferably, the grinder comprises a hopper for storage and supply of coffee beans to be ground, a grinding mechanism driven by an electric motor for grinding the coffee beans and a grinder outlet for directing ground coffee into the filter basket.
Preferably, the filter basket is a filter basket of a coffee machine portafilter.
Preferably, the dock and portafilter include complementary bayonet formations for connecting the portafilter to the dock.
Preferably, the dock comprises a platform and the dock and the portafilter include complementary formations for connecting the portafilter to the platform.
In a fourth aspect the invention provides machine for filling a coffee filter basket with tamped ground coffee, the machine comprising:

a dock for receiving the filter basket to be packed with ground coffee;
a ground coffee metering device for metering an amount of ground coffee based on at least one metering parameter;
a tamping assembly for tamping coffee added to the filter basket, the tamping assembly having:

a tamping head including a tamping surface;
a tamping actuator for moving the tamping surface along a tamping path aligned with the dock and to apply a tamping pressure to the ground coffee in the filter basket; and
a sensor to gather data indicative of the displacement of the tamping surface on the tamping path;

a controller operatively connected to the metering device and the tamping assembly and adapted to iteratively:

(a) meter a dose of ground coffee into the filter basket with the metering device based on a metering parameter value;
(b) determine an actual tamp height value indicative of an actual tamp height of tamped coffee in the filter basket upon application of a tamping pressure by the tamping assembly based on the displacement of the tamping surface on the tamping path;
(c) calculate the difference between the actual tamp height value and a target tamp height value corresponding to a predetermined target amount of coffee required;
(d) if the difference between the actual tamp height value and the target tamp height value indicates the actual amount of coffee in the filter basket is less that the target amount of coffee in the filter basket;
adjust the metering parameter value and reperform steps (a) to (d).

Preferably, the metering parameter is temporal, and the metering parameter value is a time period.
Preferably, the metering parameter is dosing time. More preferably, the metering parameter is grinder activation time.
Preferably, the step of adjusting the metering parameter value is based on the difference between the actual temp height value and the target temp height value for a time period indicated by the metering parameter value used in a prior iteration of steps (a), (b) and (c).
In a fifth aspect the invention provides machine for filling a coffee filter basket with tamped ground coffee, the machine comprising:

a dock for receiving the filter basket to be packed with ground coffee;

a ground coffee metering device for metering an amount of ground coffee based on at least one metering parameter;
a tamping assembly for tamping coffee added to the filter basket, the tamping assembly having:

a tamping head including a tamping surface;
a tamping actuator for moving the tamping surface along a tamping path aligned with the dock and to apply a tamping pressure to the ground coffee in the filter basket; and
a sensor to gather data indicative of the displacement of the tamping surface on the tamping path;

a controller operatively connected to the metering device and the tamping assembly and adapted to iteratively:

(a) meter a dose of ground coffee into the filter basket with the metering device based on a metering parameter value;
(b) determine an actual tamp height value indicative of an actual tamp height of tamped coffee in the filter basket upon application of a tamping pressure by the tamping assembly based on the displacement of the tamping surface on the tamping path;
(c) calculate the difference between the actual tamp height value and a target tamp height value corresponding to a predetermined target amount of coffee required;
(d) if the difference between the actual tamp height value and the target tamp height value indicates the actual amount of coffee in the filter basket is less that the target amount of coffee in the filter basket;
adjust the metering parameter value and reperform steps (a) to (d).

Preferably, the metering parameter is temporal, and the metering parameter value is a time period.
Preferably, the metering parameter is dosing time. More preferably, the metering parameter is grinder activation time.
Preferably, the step of adjusting the metering parameter value is based on the difference between the actual temp height value and the target temp height value for a time period indicated by the metering parameter value used in a prior iteration of steps (a), (b) and (c).
In another aspect the invention provides a tamping device comprising:

a body having a longitudinal axis and comprising a peripheral side wall extending upwardly from a base wall, the base wall wherein a bottom exterior surface of the base wall provides a tamping surface orthogonal to the longitudinal axis, and an internal bore vertically aligned with the longitudinal axis;
a tamping piston slidably mounted within the bore for movement along a tamping path aligned with the cylinder axis between a raised position and a striking position in abutment with a striking stop on the body;
a release mechanism for biasing the piston toward the raised position over an upper portion of the tamping path between the raised position and a release position and allowing the piston to travel substantially freely along a lower portion of the tamping path between the release position and the striking position; and
a charging assembly connected to the piston comprising a resilient charging member for storing a striking load and a charging handle for applying a charging force upon the piston to charge the charging member with said striking load and to move the piston between the raised position at the release position whereby the striking load is released to act upon the piston causing the piston to move to the striking position.

Preferably the release mechanism comprises a track and track follower biased into engagement with the track. More preferably the track comprises a first portion and a second and wherein the follower engages the first portion of the track when the piston is between the raised position and the release position, and wherein the follower engages the second portion of the track when the piston is between the release position and the striking position.
Preferably the follower is urged into engagement with the track at an acute angle along the first portion of the track so as to bias the piston toward the raised position and wherein the follower is urged into engagement with the track normal to the track along the second portion of the track so as to allow the piston to travel substantially freely.
Preferably the track is disposed on the piston and the follower is carried by the body.

**Brief Description of Drawings**

The invention will be more clearly understood from the following description of an embodiment thereof, given by way of example only, with reference to the accompanying drawings, in which: -

Figure 1 is a perspective view of a device for packing ground coffee into a ground coffee filter basket in accordance with the invention and a portafilter having a filter basket set in a dock of the device;

Figure 2a is a side view of the device and portafilter shown in Figure 1;

Figure 2b is a detailed cross-sectional side view of Figure 2a showing a vibrator in accordance with the

invention;

Figure 2c is another detailed cross-sectional side view of Figure 2a, displaying coffee powder heaped in the filter basket of the portafilter;

Figure 2d is yet another detailed cross-sectional side view of Figure 2a, displaying coffee powder levelled in the filter basket of the portafilter;

Figures 3a and 3b are schematic representations of a vibrator assembly in accordance with another embodiment of the invention shown from the side;

Figures 4a and 4b are schematic representations of a vibrator assembly in accordance with yet another embodiment of the invention shown in plan;

Figures 5a and 5b are schematic representations of an espresso machine in accordance with another embodiment of the invention;

Figure 6 is a perspective view of a device for packing ground coffee into a ground coffee filter basket in accordance with another embodiment of the invention and a portafilter having a filter basket set in a dock of the device;

Figure 7 is a schematic side view of the device and portafilter shown in Figure 6;

Figure 8a is a cross-sectional schematic side view of Figure 7, displaying coffee powder in the filter basket of the portafilter prior to tamping;

Figure 8b is a cross-sectional schematic side view of Figure 7, displaying coffee powder in the filter basket of the portafilter during tamping;

Figure 9 is a flow chart indicating a device and method for packing a portafilter;

Figure 10 is a sectional side view of a tamping device in accordance with another aspect;

Figure 11 is a side view of the tamping device shown in Figure 10, with internal features shown in broken line;

Figures 12a - 12d are sectional side views of the tamping device shown in Figure 10 sequentially showing the charging and release operation of the device;

Figures 13a and 13b are sectional side views of another tamping device in accordance with the invention including adjustable pre-tensioning of the charging member;

Figure 14 is a schematic representation exemplifying distances travelled by the tamper (tamp height) during iterative fill steps of tamping and filling of a filter basket according to the invention;

Figure 15 is a graphical representation of grinder operation time t v distance travelled by the tamper H (tamp height) during iterative fill steps of tamping and filling of a filter basket according to the invention;

Figures 16a, 16b and 16c are graphical representations of grinder operation time t v distance travelled by the tamper H (tamp height) during iterative fill steps of tamping and filling a filter basket according to the invention; and

Figs. 17a and 17b collectively form a schematic block diagram representation of an electronic device upon which described arrangements can be practised.

**Description of Embodiments**

Figure 1 displays a device 10 for filling a container with ground coffee and more particularly for filling a coffee filter basket 100 of a coffee machine with ground coffee. The device includes a dock 12 for receiving and locating the filter basket 100 to be filled with ground coffee, and as seen in Figure 2b, an agitator 14 associated with the dock 12 to agitate and/or vibrate the filter basket to settle and spread the ground coffee within the basket during and/or after filling of the basket with ground coffee, prior to tamping. Advantageously the invention relies upon agitation to increase the flowability, reduce adhesion, cohesion of the ground coffee within the filter basket. High frequency vibrations are used to promote fluidizing or partial fluidizing of the ground coffee to assist dispersion and reduce heaping thereby promoting uniform distribution of the coffee in the basket. Lower frequency agitation may advantageously be applied to similar effect. In this embodiment, the basket 100 is disposed in a portafilter 102 commonly used for producing espresso beverages in an espresso coffee machine and the agitator 14 is in the form of a vibrator. The portafilter included a head 104 housing the filter basket 100 and a handle 106.

The dock includes filter basket engaging formations to securely support and locate the basket in the dock 12 and at least one vibrating member for delivering vibration to the basket from the vibrator. With reference to Figures 2a and particularly the detailed view shown in Figure 2b, the dock 12 comprises a bottom vibrating platform 16 operatively connected to the vibrator 14, and locating formations 18a, 18b for engaging the bayonet "ears" tabs or pins on the portafilter head 104 used for attaching the portafilter 102 to a group head of an espresso machine. When engaged in the dock 12, the bayonet ears 108 are cradled by a pair of bayonet supports 18a and the rim of the head of the portafilter is

positioned under a balance tab 18b at the rear of the dock so that the mass of the portafilter handle 104 is counterbalanced. The base of the basket is rests on the vibrating platform 16 which transmits vibrations generated by the vibrator 14 directly to the basket 100 and the ground coffee therein.

In alternative embodiments the vibrator 14 is associated with formations configured to fit with the attachment formations of the portafilter used to secure the portafilter to the group head of the espresso machine. For instance, the dock may include bayonet formations operatively connected to a vibrator and configured to receive the bayonet formations 108 on the portafilter head 104 in a similar manner to the fittings on the group head used to secure the portafilter when brewing coffee.

With reference to the side view of Figure 2a and the detailed cross-sectional side view shown in Figure 2b, the vibrating platform 16 is driven by a motor 20. In this embodiment, the motor 20 drives an off-center coupling 22 comprising a cam 24 fixedly mounted to the motor spindle 26. As can be seen in Figure 2a, the platform 16 is concentrically mounted to the cam 24 on a common axis X which is offset from, but parallel to the axis of rotation Y of the motor spindle 26. Accordingly, rotation of the motor spindle generates an eccentric circular oscillation of the platform around the motor spindle axis thereby imparting a 360 degree vibration on a horizontal plane associated with platform 16. A bushing or bearing such as a roller bearing 28 is placed between the cam 24 and the platform 16 to allow free rotation of the cam 24 with respect to the platform 16 and to reduce friction and prevent wear of the coupling.

The displacement d between the common axis X and the spindle axis Y determines the amplitude of the vibration while the rotational speed of the cam determines its frequency. The coupling is offset from the central axis of rotation by between 0.1mm and 1mm, ideally around 0.25mm. Typically, the motor is an electric motor placed beneath the platform as is shown in Figure 2b, 2c and 2d and is configured to rotate the cam at a speed of between 2000 - 5000rpm, ideally around 3500rpm (providing a vibration frequency of between around 30 Hz to 85Hz, preferably around 58Hz).

In use, as is shown in Figures 2c and 2d, coffee powder or ground coffee GC is added to the basket 100. Ordinarily, the coffee is added and falls in a heaped pile as shown in Figure 2c and does not distribute or spread itself across the area of the basket. Agitating or vibrating the coffee via the basket 100 has the effect of spreading or distributing the ground coffee across the area of the basket. Agitation by knocking or subjecting the coffee to an impulse tends to shake the heaped coffee level whereas at least in part, vibrations provide a "fluidization" effect modifying the flow characteristics of the ground coffee to behave in a fluid-like manner. This allows the coffee to at least partially overcome a tendency to "heap" and therefore promoting self-leveling and more evenly filling of the basket as shown in Figure 2d. Furthermore, advantageously, the application of vibration tend to cause ground coffee GC to fold and rotate within the filter basket 100 during, resulting in the coffee grounds 'nesting' amongst one another enhancing packing by reducing interstitial air gaps / voids between the coffee particles thereby promoting "de-voiding".

Thus, advantageously, by vibrating the ground coffee prior to compression during tamping, the 'puck' of coffee formed possesses increased uniformity of density thereby reducing the tendency for less resistant paths (or channels) for water during the extraction phase.

It will be appreciated that the method of agitation or generating vibrations may take other forms. For instance, in one alternative embodiment one or more eccentric rotating mass (ERM) vibrators may be used in place of the off-center coupling to transmit vibrations to the basket and uniformly distribute the coffee powder. Another embodiment includes the use of a sonic vibrator. Another embodiment includes the use of an impulse agitator or striker to provide an impulse force to the basket to agitate the coffee grounds. impart

Another embodiment of the invention is displayed in Figures 3a and 3b. In this embodiment, agitation is provided by a linear actuator such as a electromechanical solenoid 30. The solenoid 30 activates one or more formations configured to directly or indirectly transfer impulses or vibrations to the basket 100 and provide agitation of the ground coffee in the basket. In the embodiment shown in Figures 3a and 3b, the solenoid 30 oscillates a rod 34 connected to a pair of spaced arms 36 one on either side of the basket or portafilter head. Energising the solenoid 30 drives the rod in a first direction, while a resilient member such as a return spring 38 is disposed to urge the rod in a second direction when the solenoid is de-energised. Accordingly, by energizing and de-energising the solenoid 30, the rod and formations are moved to oscillate as shown by arrow OS tapping on basket 100 and delivering vibrations thereto.

A variety of different configurations of this general concept may be applied to similar effect. For instance, the solenoid may be configured to move the rod in both directions alternately by switching the current direction, or tapper connected to the actuator via mechanical linkages.

One difference between the vibration systems shown in Figure 2a and that shown in Figures 3a & 3b relates to the mode of vibration applied to the basket. As previously noted, the motor spindle shown in Figure 2a generates an eccentric circular oscillation of the platform around the motor spindle axis thereby imparting a 360 degree vibration on the horizontal plane of platform. In contrast, the linear actuator system described above and as is shown in Figure 3a & 3b generates vibration along a single axis.

Accordingly, in Figures 4a and 4b another embodiment is shown employing a rotary actuator designed to produce vibration along multiple axes. In this embodiment a tap mechanism 40 includes a rotating cam 41

arrangement to activate tappers 42a, 42b, 42c, 42d spaced circumferentially around the dock 12. Each tapper 42a, 42b, 42c, 42d includes a radially orientated stem 43, a head 44 and a tail 45 and is slidably mounted so as to be displaceable radially. Biasing means in the form of an axial spring 46 urges the tapper inwardly toward and into the path of an end portion of rotating cam 41. The cam 41 is driven by a motor (not shown) to rotate as indicated by arrow R so that the end portion engages in turn, the head of each tapper 42a, 42b, 42c, 42d thereby forcing the tapper (42a shown in Figure 4b) outwardly against the urging of spring 46. This movement causes vibration generally along a first axis A1, as indicated by arrow V. Upon release the tapper springs back by means of spring tension of spring 46 so that the tail 45 impacts upon the dock 16 further vibrating the basket. In this embodiment a first and second aligned pairs of tappers (42a & 42c and 42b &42d) are disposed to operate on respective axes A1 and A2, however alternatively each tapper may be disposed on a exclusive axis. As can be seen in this embodiment, the first and second axes A1, A2 are generally orthogonal, however they may be set at any angle. Furthermore, the system may be configured to vibrate the basket on more than two different axes for instance by circumferential spacing three tappers around the dock.

The device 10 may be incorporated into a ground coffee dosing device such as a coffee grinder as exemplified in Figures 1 & 2a wherein a coffee grinder, dock and vibrator are housed within a single housing 50. This way the vibrating function may be use as the coffee is ground and added to the filter basket 100 to reduce mess, noise and evenly distribute the coffee as it is ground and added to the basket.

A coffee supply outlet or chute 52 from the grinder is disposed above the dock 12 for directing ground coffee into the basket 100 of the portafilter when the filter basket is positioned in the dock. This enables the user to conveniently add ground coffee into the basket and level any heaps of coffee added so that it is spread relatively evenly across the basket by vibrating the portafilter.

Furthermore, the device 10 may be incorporated with other coffee making equipment. For instance, with a coffee been grinder or coffee ground distribution device as a filter basket packing machine or into an espresso machine. By way of example, Figure 5 displays a schematic front view of an espresso machine 60 having a portafilter packing station 62 on a first side of the machine and an espresso station 63 including a group head on a second side. The packing station 62 includes a dock 62a for receiving the filter basket, a grinder 62b for grinding coffee beans and adding coffee grinds to the basket and a vibrator 62c. tamping means may also be provided. The espresso station 63 include the boilers and group head. This allows the user to grind coffee, pack and tamp a portafilter on one side of the machine and conveniently brew coffee on the other side of the machine. By way example, a combined grinding, dosing, vibrating and tamping devices is displayed in Figure 7 to 9b.

A filling and tamping machine 200 for filling and tamping a filter basket 100 of a portafilter 102 with ground coffee prior to extraction of coffee in a coffee machine is displayed in Figure 6 and 7. The machine shown in Figures 6 & 7 meters a dose of coffee into the basket, tamps the coffee into the basket; determines if the amount of coffee in the basket falls within a predetermined range and if not; and calculates an amount of coffee to be added or removed. Preferably the machine then adds any shortfall of coffee into the basket and re-tamps the coffee. More preferably if an excess of coffee in the filter basket is detected the machine may utilize a user interface to notify the user to remove the excess of coffee from the basket prior to re-tamping of the coffee in the basket. Furthermore, the machine includes a vibrator to vibrate the ground coffee in the basket prior to tamping in order to enhance the compression of the grinds and uniformity of the coffee puck as previously described with reference to Figures 1 - 4.

In this regard, the machine 200 includes a housing 202 containing a coffee bean grinder 220 for producing ground coffee powder from coffee beans and metering a predetermined dose of ground coffee, a dock 212 for receiving and locating the head and filter basket 100 of a portafilter 102, a tamping assembly 230 for tamping the coffee grinds to a predetermined degree of tamping, a vibrator 240 associated with the dock 212 to vibrate the filter basket to settle and spread the ground coffee within the basket during and/or after filling of the basket with ground coffee, prior to tamping and a machine control unit (MCU) 250 operatively connected to the grinder 220, tamping assembly 230 and vibrator 240, and for controlling aspects of the machine's operation.

The grinder system 220 includes a hopper 222 for storage and supply of coffee beans to be ground, a grinding mechanism 224 driven by an electric motor 226 for grinding the coffee beans and a grinder outlet 228 for directing ground coffee into the filter basket 100 from the grinder 220. Preferably, the grinder 220 is a conical burr grinder having a grind adjustment mechanism and is disposed in an upper portion of the housing 202 to take advantage of gravity flow to move beans and coffee powder through the grinder and from the grinder outlet 228 and into the filter basket located in the dock is at a lower portion of the device. However, it will be appreciated that other types of grinders and configurations may be applied.

Preferably the vibrator 240 is as previously described and is associated with the dock for generating vibration and transmitting those vibrations to the filter basket 100 when positioned in the dock. That is to say, to settle and spread coffee grinds as they are added into the basket from the grinder 220. In this embodiment, as shown in Figure 6 & 7 the cradle arms which engage the head of the portafilter are not shown, however, the filter basket 100 can be seen resting on a dock supporting platform 214 which is associated with the vibrator as

previously described. Furthermore, resting the portafilter basket on the dock platform sets it at a known height relative to the tamping assembly 230, the importance of which will become apparent.

The tamping assembly 230 is configured to tamp the coffee grinds in the filter basket to a predetermined degree of compaction. The degree of compaction may be determined by the change in volume of the coffee, and/or by running a preset tamping cycle or process configured to provide a predetermined tamping force or pressure.

The machine shown in Figure 6, comprises a tamping actuator 232 for driving a tamping head 234 along a vertically orientated, generally linear tamping path aligned with the dock / filter basket, between a raised position shown in Figure 8a and a lowered tamping position shown in Figure 8b, whereby a tamping face 235 of the tamping head, is brought into tamping contact with coffee grinds within a filter basket 100 positioned in the dock and to apply a tamping pressure to the coffee.

In this embodiment, as seen in Figures 8a and 8b, the actuator 232 is a linear actuator comprising a piston 236 carrying the tamping head 234, and which is driven by an electric motor. The motor incudes a drive linkage which may have a gear linkage to translate rotational motion of the motor into linear motion such as by a rack and pinion drive or screw drive. Alternatively, the linear actuator may include any other type of actuator including hydraulically, pneumatically or even manually operated actuators.

Preferably the tamping assembly 230 is configured to deliver a predetermined tamping pressure to the ground coffee in the basket. When the tamping head engages the coffee, the pressure required to compress the coffee rises sharply as the coffee is compressed. When the tamping force and reaction force of the coffee are balanced, downward travel of the tamping head is halted. Thus, by configuring the tamping assembly to deliver a predetermined maximum tamping pressure and monitoring movement of the tamping assembly, the machine may determine when the tamping cycle is complete. Therefore, preferably the tamping assembly includes a sensor to determine movement of the actuator and/or tamp head. In addition, preferably the machine includes a means for regulating tamping pressure.

It will be appreciated that the internal diameter of the portafilter in conjunction with the depth and density of the ground coffee in the basket determines the dose or mass contained therein. Accordingly, by tamping the ground coffee into a basket of known dimensions at a predetermined tamp pressure to provide a particular tamped density, a measurement of depth or fill height may be used as an indicator of coffee dose. Furthermore, the fill height of the tamped coffee plays a role in coffee brewing since it determines the separation gap between the shower of the group head and the top surface of the coffee in the filter basket. Maintaining a consistent and predetermined separation gap is important to brewing coffee. The gap allows the headspace above the coffee puck to fill with water prior to the water being forced through the coffee. The headspace full of water acts like a piston to evenly distribute water pressure across the surface of the puck as the pressure builds up to extract the coffee.

Accordingly, the tamping assembly of the present invention includes means to gather data (such as a position gauge or sensor 237) to gather data indicative of the position of the tamp head 234 and particularly the position of the tamping surface on the tamping path during tamping and more particularly once the tamping is cycle is complete and the coffee has been tamped. The relative position of the tamping surface 235 of the tamping head 234 with respect to the filter basket 100 corresponds to the tamped height of the coffee in the filter basket. Thus, by setting the basket 100 at a known height on the support platform 214 of dock 212, the position or displacement of the tamping head 234 along the tamp path may be used to calculate the tamp height of the coffee and the amount of coffee within the portafilter filter basket and in particular, whether the amount of coffee in the filter basket is within, below or above a predetermined range.

The position sensor may measure the position of the tamp head, or the extension of the piston 236 carrying the tamp head along the tamp path from a reference position. The position sensor 237 may include a potentiometer; an optical sensor; a magnetic sensor; a magnetostrictive sensor; a capacitive sensor; an inductive position sensor or any other type of sensor suitable for determining the position of the tamping head. The position sensor 237 is operatively connected to the MCU 250 to determine and control the tamping cycle and provide an indication of fill of the portafilter basket.

Specifically the MCU is adapted to determine the position of the tamping surface along the tamping path upon application of the predetermined tamping pressure by the tamping assembly; calculate a tamp height value indicative of the relative tamp height of tamped coffee in the basket based on the position of the tamping surface and known basket parameters; and determine the difference between the tamp height value and a predetermined range of target tamp height values to provide an indication of an amount of coffee powder required to be added or removed from the filter basket.

In some embodiments the tamping assembly includes a tamping force sensor 238 to provide an indication of the tamping pressure exerted by the linear actuator 232 on the coffee during tamping. This allow the MCU to determine that a required tamping pressure has been applied to the coffee thereby indicating tamping is complete and deactivate the tamping actuator to prevent further compression of the coffee. Furthermore, the maximum tamping pressure applied during tamping may be selectively adjusted by the user/MCU. The tamping sensor 238 is operatively connected to the MCU 250 and used in combination with the position sensor 237 to

determine and control the tamping cycle and provide an indication of fill of the portafilter basket. For instance, the tamping pressure sensor 237 is used to monitor and ensure that a predetermined tamping pressure has been applied to coffee in the portafilter basket, while the positional sensor 237 is used to determine the tamp height and therefore the amount of coffee that has been added to the basket in order to confirm the correct does of coffee has been packed.

In some embodiments, the current draw on the tamping motor is used and monitored by a current sensor which provides a load signal to the MCU 250 the signal indicative of the amount of pressure exerted by the motor through the tamping assembly and to the coffee during tamping. In other embodiments, the pressure may be measured directly by strain gauges or the like incorporated into the tamping assembly to provide data signals to the MCU indicative of tamping pressure exerted by the tamping assembly.

The basic sequence of events for filling and tamping the portafilter basket is shown in the flow chart illustrated in Figure 9. With the filter basket of a portafilter located in the dock 212 below the coffee grinder outlet 228 as shown in Figure 7, and a sufficient quantity of coffee beans in the grinder hopper, the device is activated to begin the filling and tamping cycle. The MCU energises the grinder motor 501 to grind the coffee beans to meter a first predetermined dose of coffee powder into the filter basket wherein said dose is calculated to provide a target tamp height of tamped coffee in the basket based on known basket parameters.

Since the period of grinder activation directly correlates to the quantity of ground coffee produced, a timer 502 is set by the MCU to stop the grinder 503 after a predetermined time determined by the MCU to deliver the dose. The MCU may adjust the grinder activation period depending on a range of possible input variables and known grinding information including but not limited to coffee bean type, grind coarseness, temperature and humidity, and past grinder performance.

In step 504, the vibration mechanism is activated to settle and spread coffee grinds as they are added into the basket or shortly thereafter thereby preventing grinds piling in a heap. While the flow chart shown in Figure 9 displays the vibration mechanism step 504 being activated after the step of grinding coffee, it will be appreciated that alternatively the vibration device may be activated before or during grinding of coffee although preferably, the vibration would remain activated at least until grinding is completed and the entire dose of ground coffee is delivered to the portafilter.

The tamping cycle is initiated in step 505 so that the linear actuator moves the tamping head downwardly along the tamping path into the mouth of the filter basket and into tamping contact with the coffee therein. Initially the coffee grinds compress under the advancing tamping heap with relatively low tamping force application. However, as air gaps / voids in the coffee are substantially removed and the density of the coffee increases, further downward movement of the tamping head is resisted and the tamping load increases sharply.

Once the tamping head stops as indicated in step 506 (as shown in Figure 8b), ordinarily because the tamping pressure has increased to a predetermined value, the position of the tamping head is read 507 with the position sensor to determine a tamp height value indicative of the actual tamp height of tamped coffee in the basket based on the position of the tamping surface and known basket parameters. In step 508 the tamp height value is compared with a predetermined range of target tamp height values. If the value measured is within the range, the tamp head is retracted and the portafilter is ready for extraction as indicated in step 509.

If the sensor reveals a tamp height value that is above a predetermined range, it indicates too much coffee has been added to the basket 510. The tamping head is raised, and the device indicates to the user that too much coffee has been added 511. The user may then remove excess coffee powder from the filter basket, for instance by the device as described in US 8240244. The dosage measuring process of vibrating, tamping and determining coffee amount repeated.

If the gauge reveals a tamp height value that is below the predetermined range, thereby indicating the amount of coffee powder is insufficient 512, the tamp head is raised 513 and in step 514, the shortfall amount of coffee required to be added to the filter basket is calculated by the MCU which then determines how long the grinder must be activated to make up the shortfall. Optionally, in step 515, the vibrator 240 is activated to loosen the tamped coffee in the portafilter so that when extra coffee is added, the tamp provides a generally inform density rather that a layered structure. The additional ground coffee is added into the basket by the running the grinder, step 516 and then dosage measuring process comprising vibrating, step 517, before the steps of tamping, 505 and determining coffee amount (507 etc) are repeated.

While Figure 9 shows the vibration device being activated in step 517 after running the grinder, as with step 504 the vibration device may be activated before or during grinding of coffee although preferably, the vibration would remain activated at least until grinding is completed and the entire dose of ground coffee is delivered to the portafilter.

It will be appreciated that the flowchart "loop" indicated by arrow 520 provides for iteratively dosing, tamping coffee and measuring the height of the tamped coffee (tamp height) by measuring the tamper displacement during tamping until an optimal tamp height of coffee in the portafilter is reached, or at least a tamp height with a tolerance range.

An iterative dosing algorithm in accordance with the invention is schematically illustrated in Figs 14 - 16c. In particular, iterative fill steps of progressively adding coffee to the portafilter and tamping as described above

is schematically represented in Figure 14 wherein H is the maximum distance of travel of the tamper (tamp height) where the tamper would hit the bottom of the portafilter basket; $h_{opt}$ represents the tamp height giving an optimal amount of coffee in the portafilter within a tolerance ε and $h_i$ denotes the distance travelled by the tamper at the $i^{th}$ iteration. For instance ($h_0$, $h_1$, $h_2$..etc) indicate the tamp height at the initial fill and then the first, second etc iteration fills. Referring to Figure 15, the distance travelled by the tamper (tamp height) H is plotted against a metering parameter used to regulate dose amount. In this example, the metering parameter is "dosing time" which is used by the metering device as a proxy for ground coffee dose amount however, another metering parameter, time or otherwise, indictive of coffee amount of coffee added may be substituted in place of, or in addition to dosing time. For instance, grinder activation time, the time period for which the grinder is activated, may function as the metering parameter.

During each dosing iteration, the coffee is tamped and the distance travelled by the tamper, $h_i$, from a predetermined position is measured. At the $i^{th}$ iteration, coffee ground is dosed for ($t_i$ - $t_{i-1}$) seconds. The objective is to minimise the difference between the distance travelled by the tamper $h_i$ and the optimum coffee level given by $h_{opt}$ or :

$$\Delta h_i = h_i - h_{opt}$$

A tolerance or specified error limit ε is set so that if $\Delta h_i \leq \varepsilon$, the dosing is deemed complete as the coffee ground has reached the optimal height within the specified error limit, ε. Otherwise, another iteration is needed.

Figure 15 graphically displays the distance travelled by the tamper (tamp height) for the initial fill $h_0$ and dosing time $t_0$. The distance gradient m is evaluated as:

$$\frac{dh_i}{dt_i} = \frac{h_i - H}{t_i - 0} = \frac{\Delta h_i}{t_{i-1} - t_i}$$

As represented by broken line, the distance gradient m is assumed to remain constant for the next iteration. Hence, the dosing time for the $(i+1)^{th}$ iteration is

$$t_{i-1} - t_i = \frac{t_i \Delta h_i}{h_i - H}$$

An example where three iterations are required to reach the optimal height is shown in Figure 16a - 16c. At iteration 0 represented in Figure 16a, the ground coffee is dosed to the filter basket for a predetermined metering parameter or in this example, time, $t_0$. Since $\Delta h_0 > \varepsilon$, another dose is required, and the duration is calculated from the gradient,

$$t_1 - t_0 = \frac{t_0 \Delta h_0}{h_0 - H}$$

At iteration 1, the distance travelled by the tamper is $h_1$. Still, $\Delta h_1 > \varepsilon$ and so, another dose is required. The dosing duration is

$$t_2 - t_1 = \frac{t_1 \Delta h_1}{h_1 - H}$$

At iteration 2, the distance travelled by the tamper is $h_2$. This time, $\Delta h_2 \leq \varepsilon$, and so dosing is complete.

The above algorithm may be implemented by the MCU based off predetermined values set programmed and measured parameters.

In addition, each time the tamp height is measured, the MCU 250 may use the data to adjust the grinding control profiles and in particular, make adjustments for the performance of the grinder. For instance, if a shortfall in the amount of coffee is measured, not only does the MCU calculate the required grinder activation time to make up the shortfall, the data may be used to provide feedback to recalibrate the grinder and the grinder control so as to compensate for unexpected shortfall. For instance, due to changes in ambient conditions, coffee beans and/or grinder performance degradation over time. Grinder control profiles may be reset when changing coffee beans or after machine servicing.

In addition, typically, the vibration device is activated for a period of time before deactivating. The period may be selected to be constant, for instance, for a predetermined number of seconds, or vary dependent on another parameter or parameters. For instance, since typically the initial fill will add comparatively more coffee to the basket than subsequent top up fills, the vibration device may be programmed to run longer on the initial fill (ie step 504) and progressively shorter on subsequent top of fills (ie step 517). Parameters which may be used to determine vibration device activation period include but are not limited to one or more of the number of times the grinder has been activated in the filling cycle, the amount of coffee added to the basket, the plunger depth or the duration of the grinder operation.

A alternative hand operated tamping device for compressing coffee grounds in a coffee filter basket and particularly the filter basket of a portafilter is displayed in Figures 10 and 11. The tamping device 600 includes a body 610 in the form of a cylinder having a longitudinal cylinder axis AT the body including a peripheral side wall 613 extending upwardly from a base wall 615 at the heal of the body, the base wall providing a tamping surface 612, orthogonal to the cylinder axis at a bottom exterior surface. The body 610 includes an internal chamber or bore 614 vertically aligned with the cylinder axis AT for housing a tamping piston 620 slidably mounted within the bore 614 for movement along a vertical tamping path

between a raised position and a lower striking position in abutment with a striking stop 616 the body 610. The device further includes a release mechanism 630 for biasing the piston 620 toward the raised position over an upper portion of the tamping path between the raised position and a release position and allowing the piston 620 to travel substantially freely along a lower portion of the tamping path between the release position and the striking position.

The device further includes a charging assembly 640 connected to the piston 620 including resilient charging member 642 for storing a striking load or energy and a charging handle 644 for applying a charging force upon the piston 620 to charge the charging member with said striking load and to move the piston 620 between the raised position and the release position.

Referring to Figures 10 and 11, in this embodiment the body 610 is circular and generally cup shaped having a closed bottom end which forms the tamping surface 612 and prevents ingress of coffee powder or other materials, and an open top allowing access to the chamber. The bore 614 is also preferably circular and the foot of the bore provides the striking stop 616. While the upper portion of the body may have a non-circular cross-section, the tamping surface 614 and heal of the body, is adapted to correspond to the shape and diameter of a portafilter filer basket so as to fit within the basket and therefore is preferably circular. Furthermore, the body, and particularly the lower portion of the body providing the tamping surface, may be interchangeable or provided with adaptors allowing the tamping device to be adapted to fit a range of different portafilters.

The piston 620 is preferably formed of a tough dense material with a high specific gravity so as to enhance its inertia and striking force. A bottom face 621 of the piston is configured to strike the striking stop 616 at the foot of the bore 614 when the piston moves to the striking position.

In this embodiment the release mechanism 630 includes a track 632 and track follower 634 biased into engagement with the track 632 by a resilient release spring 635. In this embodiment the track 632 is disposed on the piston 620 and the follower 634 is carried by the body 610, however it will be appreciated that in other embodiments the track may be disposed on the body and the follower carried by the piston.

As can be seen, the follower 634 is formed as a plunger, slidably mounted to the body 610 and partially received within a recess 636 disposed in side wall 613 of the bore 614 to extend orthogonal to the cylinder axis. The follower 634 is biased into engagement with the track 632 on the piston by release spring 635. A roller 637 disposed on a tip of the follower 634 abuts the track 632 to reduce friction as the follower 634 travels along the track 632.

The track 632 includes a first ramped portion 632a which due to the urging of the follower 634 on the track 632 biases the piston 620 toward the raised position over the upper portion of the tamping path between the raised position and the release position. A second vertical portion 632b of the track is engaged by the follower over the lower portion of travel of the piston along the tamping path between the release position and the striking position. It will be appreciated that when the follower is engaged with the second portion of the track 632b, the biasing forces provided by the return spring 635 act normal to the track 632 such that the piston 620 may to travel relatively freely along a lower portion of the tamping path.

The charging handle 644 may be embodied in the form of a cap as can be seen with reference to Figure 10, providing the user to ergonomic surface 645 to apply pressure to the preload member. The cap includes a peripheral skirt 646 which sliding surrounds the outer walls of the body to provide a measure of sealing the device to protect the internals from the preventing ingress of dirt and debris. The handle 644 includes a shaft 647 extending from an underside surface 648 of the cap and for locating in a corresponding bore 624 on the piston 620 to positively connect the handle to the piston while allowing for slidable movement therebetween. The charging member 642 itself is positioned between the piston 620 and the handle 644 and is in the form of a coil spring.

In some embodiments of the tamping device 600’, as shown in Figure 13a and 13b, a preload adjuster 700 is provided to preload the charging member spring thereby providing a measure of adjustment of the tamping impact. In Figure 13 a support member 701 supports the resilient charging member 642 and is threadably engaged with the cap 644. As can be seen in Figure 123b, winding of the threaded member allows the support member to be vertically displaced with respect to the cap 644 and pre-tensioning of the charging member 642.

The operation of the tamping device will now be explained with reference to Figures 12a to 12d. In Figure 12a the tamping device is shown in a rest configuration. It will be noted that the piston 620 is in the raised position with respect to the body 610 being biased by the release spring 635 which holds the follower 634 firmly against the ramped portion 632a of the track 632. More particularly, the follower 634 is biased by the release spring 635 to the very end position of the ramped section of the track. The charging member 642 located between the piston 620 and the charging handle 644 is largely uncompressed and biases the charging handle 644 away from the piston 620.

In Figure 12b a charging force is applied downwardly to the changing handle 644 and indicated by arrow CF. Preferably the lower end of the body is position within the open top of filter basket (not shown) containing a dose of coffee grind to be tamped so that the tamping surface 612 is in contact with the coffee. Charging force CF has the effect of compressing the charging spring 642 and moving the charging handle 644 downwardly toward the piston 620 so that the cap shaft 647 advances into the bore 624 on the piston 620 and the cap skirts 646 slide

down the outside of the body 610. It should be noted that in this illustration in the direction of arrow C, the charging spring 642 is fully compressed, preventing the charging handle 644 moving closer to the piston 620.

In Figure 12c, further pressure indicated again by CF begins to force the piston 620 downwardly in the bore 614 with respect to the body in the direction of arrow D. It can be seen that the follower 634 has begun to move along the ramped portion 632a of the track, compressing the release spring 635 in the direction of arrow E.

Once the piston 620 travels to the release position, the follower 634 travels to the second vertical track portion 632a, such that the release mechanism 630 no longer resists downward movement provided by charging force CF since the follower biasing force now acts normal to the track 632a.

Unrestrained by the release mechanism, the piston 620 is now relatively free to travel downwardly under the influence of the charging force CF and the potential energy stored in the charging spring as spring energy. These forces accelerate the piston 620 downwardly as indicated by arrows F, toward the striking position. As seen in Figure 12d, the piston moves toward the striking position where the bottom face 621 of the piston impacts the striking stop 616 at the foot of the bore 614. When the piston impacts the body, inertial energy is passed to the body and into the coffee to be tamped via the tamping surface 612.

As the follower 634 transitions along the track 632 from the first ramped surface 632a to the second vertical surface 632b, the user is provided with tactile feedback that assures the user the tamping force is delivered. It will be appreciated that the tamping device will deliver a consistent tamping force to the coffee in the portafilter thereby enabling the user confidence that an appropriate amount of tamping has been pressure has been applied. Furthermore, since the tamping charge stored in the device is released upon application of further pressure, the user will be uninclined to apply too much force to the device thereby minimizing risk of injury with repeated use.

While the tamping device has been designed as a manual tool, it may be incorporated into a machine such as that described in Figures 6 & 7 to be actuated either directly manually, via a lever system to provide a mechanical advantage or by a powered actuator.

Figs. 17a and 17b collectively form a schematic block diagram of a general purpose electronic device 1701 serving as machine control unit (MCU) 250. The electronic device includes embedded components, upon which the methods described herein before are desirably practiced. The electronic device 1701 may be, for example, a domestic appliance, in which processing resources are limited. Nevertheless, the methods to be described may also be performed on higher-level devices such as desktop computers, server computers, and other such devices with significantly larger processing resources.

As seen in Fig. 17a, the electronic device 1701 comprises an embedded controller 1702. Accordingly, the electronic device 1701 may be referred to as an "embedded device." In the present example, the controller 1702 has a processing unit (or processor) 1705 which is bidirectionally coupled to an internal storage module 1709. The storage module 1709 may be formed from non-volatile semiconductor read only memory (ROM) 1760 and semiconductor random access memory (RAM) 1770, as seen in Fig. 17b. The RAM 1770 may be volatile, non-volatile or a combination of volatile and non-volatile memory.

The electronic device 1701 may include a display controller 1707, which is connected to a video display 1714, such as a liquid crystal display (LCD) panel or the like. The display controller 1707 is configured for displaying graphical images on the video display 1714 in accordance with instructions received from the embedded controller 1702, to which the display controller 1707 is connected.

The electronic device 1701 may also include user input devices 1713 which are typically formed by keys, a keypad or like controls. In some implementations, the user input devices 1713 may include a touch sensitive panel physically associated with the display 1714 to collectively form a touch-screen. Such a touch-screen may thus operate as one form of graphical user interface (GUI) as opposed to a prompt or menu driven GUI typically used with keypad-display combinations. Other forms of user input devices may also be used, such as a microphone (not illustrated) for voice commands or a joystick/thumb wheel (not illustrated) for ease of navigation about menus.

As seen in Fig. 17a, the electronic device 1701 also comprises a portable memory interface 1706, which is coupled to the processor 1705 via a connection 1719. The portable memory interface 1706 allows a complementary portable memory device 1725 to be coupled to the electronic device 1701 to act as a source or destination of data or to supplement the internal storage module 1709. Examples of such interfaces permit coupling with portable memory devices such as Universal Serial Bus (USB) memory devices, Secure Digital (SD) cards, Personal Computer Memory Card International Association (PCMIA) cards, optical disks and magnetic disks.

The electronic device 1701 also may have a communications interface 1708 to permit coupling of the device 1701 to a computer or communications network 1720 via a connection 1721. The connection 1721 may be wired or wireless. For example, the connection 1721 may be radio frequency or optical. An example of a wired connection includes Ethernet. Further, an example of wireless connection includes BluetoothTM type local interconnection, Wi-Fi (including protocols based on the standards of the IEEE 802.11 family), Infrared Data Association (IrDa) and the like.

Typically, the electronic device 1701 is configured to perform some special function. The embedded controller 1702, possibly in conjunction with further special function components 1710, is provided to perform that special function. For example, the components 1710 may include sensors, timers and the like. The special function components 1710 is connected to the embedded controller 1702.

The methods described hereinbefore may be implemented using the embedded controller 1702, where the processes of Fig. 9 and Fig. 16 may be implemented as one or more software application programs 1733 executable within the embedded controller 1702. The electronic device 1701 of Fig. 17a implements the described methods. In particular, with reference to Fig. 17b, the steps of the described methods are effected by instructions in the software 1733 that are carried out within the controller 1702. The software instructions may be formed as one or more code modules, each for performing one or more particular tasks. The software may also be divided into two separate parts, in which a first part and the corresponding code modules performs the described methods and a second part and the corresponding code modules manage a user interface between the first part and the user.

The software 1733 of the embedded controller 1702 is typically stored in the non-volatile ROM 1760 of the internal storage module 1709. The software 1733 stored in the ROM 1760 can be updated when required from a computer readable medium. The software 1733 can be loaded into and executed by the processor 1705. In some instances, the processor 1705 may execute software instructions that are located in RAM 1770. Software instructions may be loaded into the RAM 1770 by the processor 1705 initiating a copy of one or more code modules from ROM 1760 into RAM 1770. Alternatively, the software instructions of one or more code modules may be pre-installed in a non-volatile region of RAM 1770 by a manufacturer. After one or more code modules have been located in RAM 1770, the processor 1705 may execute software instructions of the one or more code modules.

The application program 1733 is typically pre-installed and stored in the ROM 1760 by a manufacturer, prior to distribution of the electronic device 1701. However, in some instances, the application programs 1733 may be supplied to the user encoded on one or more CD-ROM (not shown) and read via the portable memory interface 1706 of Fig. 17a prior to storage in the internal storage module 1709 or in the portable memory 1725. In another alternative, the software application program 1733 may be read by the processor 1705 from the network 1720, or loaded into the controller 1702 or the portable storage medium 1725 from other computer readable media. Computer readable storage media refers to any non-transitory tangible storage medium that participates in providing instructions and/or data to the controller 1702 for execution and/or processing. Examples of such storage media include floppy disks, magnetic tape, CD-ROM, a hard disk drive, a ROM or integrated circuit, USB memory, a magneto-optical disk, flash memory, or a computer readable card such as a PCMCIA card and the like, whether or not such devices are internal or external of the device 1701. Examples of transitory or non-tangible computer readable transmission media that may also participate in the provision of software, application programs, instructions and/or data to the device 1701 include radio or infrared transmission channels as well as a network connection to another computer or networked device, and the Internet or Intranets including e-mail transmissions and information recorded on Websites and the like. A computer readable medium having such software or computer program recorded on it is a computer program product.

The second part of the application programs 1733 and the corresponding code modules mentioned above may be executed to implement one or more graphical user interfaces (GUIs) to be rendered or otherwise represented upon the display 1714 of Fig. 17a. Through manipulation of the user input device 1713 (e.g., the keypad), a user of the device 1701 and the application programs 1733 may manipulate the interface in a functionally adaptable manner to provide controlling commands and/or input to the applications associated with the GUI(s). Other forms of functionally adaptable user interfaces may also be implemented, such as an audio interface utilizing speech prompts output via loudspeakers (not illustrated) and user voice commands input via the microphone (not illustrated).

Fig. 17b illustrates in detail the embedded controller 1702 having the processor 1705 for executing the application programs 1733 and the internal storage 1709. The internal storage 1709 comprises read only memory (ROM) 1760 and random access memory (RAM) 1770. The processor 1705 is able to execute the application programs 1733 stored in one or both of the connected memories 1760 and 1770. When the electronic device 1701 is initially powered up, a system program resident in the ROM 1760 is executed. The application program 1733 permanently stored in the ROM 1760 is sometimes referred to as "firmware". Execution of the firmware by the processor 1705 may fulfil various functions, including processor management, memory management, device management, storage management and user interface.

The processor 1705 typically includes a number of functional modules including a control unit (CU) 1751, an arithmetic logic unit (ALU) 1752, a digital signal processor (DSP) 1753 and a local or internal memory comprising a set of registers 1754 which typically contain atomic data elements 1756, 1757, along with internal buffer or cache memory 1755. One or more internal buses 1759 interconnect these functional modules. The processor 1705 typically also has one or more interfaces 1758 for communicating with external devices via system bus 1781, using a connection 1761.

The application program 1733 includes a sequence of instructions 1762 though 1763 that may include conditional branch and loop instructions. The program 1733 may also include data, which is used in execution of the program 1733. This data may be stored as part of the instruction or in a separate location 1764 within the ROM 1760 or RAM 1770.

In general, the processor 1705 is given a set of instructions, which are executed therein. This set of instructions may be organised into blocks, which perform specific tasks or handle specific events that occur in the electronic device 1701. Typically, the application program 1733 waits for events and subsequently executes the block of code associated with that event. Events may be triggered in response to input from a user, via the user input devices 1713 of Fig. 17a, as detected by the processor 1705. Events may also be triggered in response to other sensors and interfaces in the electronic device 1701.

The execution of a set of the instructions may require numeric variables to be read and modified. Such numeric variables are stored in the RAM 1770. The disclosed method uses input variables 1771 that are stored in known locations 1772, 1773 in the memory 1770. The input variables 1771 are processed to produce output variables 1777 that are stored in known locations 1778, 1779 in the memory 1770. Intermediate variables 1774 may be stored in additional memory locations in locations 1775, 1776 of the memory 1770. Alternatively, some intermediate variables may only exist in the registers 1754 of the processor 1705.

The execution of a sequence of instructions is achieved in the processor 1705 by repeated application of a fetch-execute cycle. The control unit 1751 of the processor 1705 maintains a register called the program counter, which contains the address in ROM 1760 or RAM 1770 of the next instruction to be executed. At the start of the fetch execute cycle, the contents of the memory address indexed by the program counter is loaded into the control unit 1751. The instruction thus loaded controls the subsequent operation of the processor 1705, causing for example, data to be loaded from ROM memory 1760 into processor registers 1754, the contents of a register to be arithmetically combined with the contents of another register, the contents of a register to be written to the location stored in another register and so on. At the end of the fetch execute cycle the program counter is updated to point to the next instruction in the system program code. Depending on the instruction just executed this may involve incrementing the address contained in the program counter or loading the program counter with a new address in order to achieve a branch operation.

Each step or sub-process in the processes of the methods described below is associated with one or more segments of the application program 1733, and is performed by repeated execution of a fetch-execute cycle in the processor 1705 or similar programmatic operation of other independent processor blocks in the electronic device 1701.

Further examples according to the present disclosure are defined in the following nonlimiting clauses, numbered C1 to C55:

C1. A device for packing ground coffee in a coffee filter basket, the device comprising:

a dock for receiving the filter basket to be packed with ground coffee;
an agitator associated with the dock to agitate the filter basket and thereby distribute the ground coffee within the filter basket.

C2.The device of clause C1 wherein the agitator comprises a vibrator having a vibrating member connected to the dock.

C3.The device of clause C2 wherein the vibrating member comprises an eccentric rotating mass vibrator.

C4. The device of clause C2 or C3 wherein the vibrator comprises a motor for driving the vibrating member though an off-center coupling.

C5. The device of clause C4, wherein the drive shaft of the motor is vertically orientated.

C6. The device of clause C5 wherein the off-center coupling comprises a cam connected to a drive shaft driven by the motor.

C7.The device of clause C6 wherein the off-center coupling comprises a bearing disposed between the cam and the dock to allow free rotation of the cam with respect to the dock.

C8. The device of any one of clauses C2 to C7 wherein the vibrator is configured to agitate the filter basket on a generally horizontal plane.

C9. The device according to any one of clauses C2 to C8 wherein the vibrator is configured to generate vibrations having an amplitude of between around 0.1mm and 1mm, preferably around 0.25mm.

C10. The device of any one of clauses C2 to C9 wherein the vibrator is configured to generate vibrations having a frequency of between around 2000 rpm and 5000 rpm, preferably around 3500 rpm.

C11. The device of any one of the preceding clauses wherein the agitator comprises a linear actuator.

C12. The device of any one of the preceding clauses wherein the agitator comprises an electromechanical solenoid.

C13. The device of any one of the preceding clauses including a grinder for grinding coffee beans and directing ground coffee into the filter basket when the filter basket is located in the dock.

C14. The device of any one of the preceding clauses including a coffee tamping assembly for tamping coffee in the filter basket.

C15. The device of any one of the preceding clauses wherein the filter basket is a filter basket of a coffee machine portafilter.

C16. The device of clause C15 wherein the dock and portafilter include complementary bayonet formations for securing the portafilter to the dock.

C17. The device of clause C15 wherein the dock comprises a platform and the dock and the portafilter include complementary formations for securing the portafilter to the platform.

C18. A machine for filling a coffee filter basket with tamped ground coffee, the machine comprising:

- a dock for receiving the filter basket to be packed with ground coffee;
- a ground coffee metering device for metering ground coffee into the filter basket when the filter basket is located in the dock;
- a tamping assembly for tamping coffee added to the filter basket, the tamping assembly having:
    - a tamping head including a tamping surface;
    - a tamping actuator for moving the tamping surface along a tamping path aligned with the dock and to apply a tamping pressure to the ground coffee in the filter basket; and
    - a sensor to gather data indicative of the displacement of the tamping surface on the tamping path;
    - a controller operatively connected to the metering device and the tamping assembly and adapted to:
        - meter a first dose of ground coffee into the filter basket with the metering device;
        - determine the displacement of the tamping surface along the tamping path upon application of a tamping pressure by the tamping assembly;
        - calculate a tamp height value indicative of an actual tamp height of tamped coffee in the filter basket based on the displacement of the tamping surface;
        - calculate a variation amount of coffee powder required to be added to or removed from the filter basket based on the difference between the actual tamp height value and a predetermined range of target tamp height values;
    - meter the variation amount of coffee powder into the filter basket with the metering device if the actual tamp height value is less than the predetermined range of target tamp height values.

C19. The machine of clause C18 wherein said first dose is estimated to provide a target tamp height of tamped coffee in the filter basket based on known filter basket parameters.

C20. The machine of clause C18 or C19 wherein the controller is adapted to determine a calibration parameter based on the difference between the actual tamp height value and the predetermined range of target tamp height values and wherein the calibration parameter is used to calibrate the ground coffee metering device.

C21. The machine of clause C18, C19 or C20 including an agitator associated with the dock to agitate the filter basket and thereby distribute the ground coffee within the filter basket.

C22. The machine of clause C21 wherein the agitator is operatively connected to the controller for agitating the coffee in the filter basket prior to tamping.

C23. The machine of clause C22 wherein the agitator comprises a vibrator having a vibrating member connected to the dock.

C24. The machine of any one of clauses C18 to C23 wherein the metering device comprises a coffee bean grinder for grinding coffee beans into ground coffee.

C25. The machine of clause C24 wherein the grinder comprises a hopper for storage and supply of coffee beans to be ground, a grinding mechanism driven by an electric motor for grinding the coffee beans and a grinder outlet for directing ground coffee into the filter basket.

C26. The machine of any one of clauses C18 to C25 wherein the filter basket is a filter basket of a coffee machine portafilter.

C27. The machine of clause C26 wherein the dock and portafilter include complementary bayonet formations for securing the portafilter to the dock.

C28. The machine of clause C26 wherein the dock comprises a platform and the dock and the portafilter include complementary formations for securing the portafilter to the platform.

C29. A method of filing a coffee filter basket with tamped ground coffee by a machine, said machine comprising:

- a dock for receiving the filter basket to be packed with ground coffee;
- a ground coffee metering device for metering ground coffee into the filter basket when the filter basket is located in the dock;
- a tamping assembly for tamping coffee in the filter basket, the tamping assembly having:
    - a tamping head including a tamping surface;
    - a tamping actuator for moving the tamping surface along a tamping path aligned with the dock and to apply a tamping pressure to the ground coffee in the filter basket; and
    - a sensor to gather data indicative of the displacement of the tamping surface on the tamping path;

a controller operatively connected to the metering device and the tamping assembly;
said method including the steps of:

metering a first dose of ground coffee into the filter basket with a ground coffee metering device;
determining the displacement of the tamping surface along the tamping path upon application of a tamping pressure by the tamping assembly;
calculating a tamp height value indicative of an actual tamp height of tamped coffee in the filter basket based on the displacement of the tamping surface;
determining the difference between the actual tamp height value and a predetermined range of target tamp height values; and
calculating a variation amount of coffee powder required to be added to or removed from the filter basket based on the difference between the actual tamp height value and a predetermined range of target tamp height values;
metering the variation amount of coffee powder into the filter basket with the metering device if the actual tamp height value is less than the predetermined range of target tamp height values.

C30. The method of clause C29 wherein said first dose is estimated to provide a target tamp height of tamped coffee in the filter basket based on known filter basket parameters.
C31. The method according to clause C29 or C30 wherein the controller is adapted to determine a calibration parameter based on the difference between the actual tamp height value and the predetermined range of target tamp height values and wherein the calibration parameter is used to calibrate the ground coffee metering device.
C32. The method according to clause C29, C30 or C31 including an agitator associated with the dock to agitate the filter basket and thereby distribute the ground coffee within the filter basket.
C33. The method according to clause C32 wherein the agitator is operatively connected to the controller for agitating the coffee in the filter basket prior to tamping.
C34. The method according to clause C32 or C33 wherein the agitator is operatively connected to the controller for agitating the coffee in the filter basket prior to metering the variation amount of coffee powder into the filter basket.
C35. The method according to clause C34 wherein the agitator comprises a vibrator having a vibrating member connected to the dock.
C36. The method according to any one of clauses C29 to C35 wherein the metering device comprises a coffee bean grinder for grinding coffee beans into ground coffee.
C37. The method according to clause C36 wherein the grinder comprises a hopper for storage and supply of coffee beans to be ground, a grinding mechanism driven by an electric motor for grinding the coffee beans and a grinder outlet for directing ground coffee into the filter basket.
C38. The method according to any one of clauses C29 to C37 wherein the filter basket is a filter basket of a coffee machine portafilter.
C39. The method according to clause C38 wherein the dock and portafilter include complementary bayonet formations for securing the portafilter to the dock.
C40. The method according to clause C38 wherein the dock comprises a platform and the dock and the portafilter include complementary formations for securing the portafilter to the platform.
C41. A machine for filling a coffee filter basket with tamped ground coffee, the machine comprising:

a dock for receiving the filter basket to be packed with ground coffee;
a ground coffee metering device for metering an amount of ground coffee based on at least one metering parameter;
a tamping assembly for tamping coffee added to the filter basket, the tamping assembly having:

a tamping head including a tamping surface;
a tamping actuator for moving the tamping surface along a tamping path aligned with the dock and to apply a tamping pressure to the ground coffee in the filter basket; and
a sensor to gather data indicative of the displacement of the tamping surface on the tamping path;
a controller operatively connected to the metering device and the tamping assembly and adapted to iteratively:

(a) meter a dose of ground coffee into the filter basket with the metering device based on a metering parameter value;
(b) determine an actual tamp height value indicative of an actual tamp height of tamped coffee in the filter basket upon application of a tamping pressure by the tamping assembly based on the displacement of the tamping surface on the tamping path;
(c) calculate the difference between the actual tamp height value and a target tamp height value corresponding to a

predetermined target amount of coffee required;
(d) if the difference between the actual tamp height value and the target tamp height value indicates the actual amount of coffee in the filter basket is less that the target amount of coffee in the filter basket;

adjust the metering parameter value and reperform steps (a) to (d).

C42. The machine of clause C41 wherein the metering parameter is temporal, and the metering parameter value is a time period.
C43. The machine of clause C42 wherein the metering parameter is dosing time.
C44. The machine of clause C42 wherein the metering parameter is grinder activation time.
C45. The machine of clause C43 wherein the step of adjusting the metering parameter value is based on the difference between the actual temp height value and the target temp height value for a time period indicated by the metering parameter value used in a prior iteration of steps (a), (b) and (c).
C46. A machine for filling a coffee filter basket with tamped ground coffee, the machine comprising:

a dock for receiving the filter basket to be packed with ground coffee;
a ground coffee metering device for metering an amount of ground coffee based on at least one metering parameter;
a tamping assembly for tamping coffee added to the filter basket, the tamping assembly having:

a tamping head including a tamping surface;
a tamping actuator for moving the tamping surface along a tamping path aligned with the dock and to apply a tamping pressure to the ground coffee in the filter basket; and
a sensor to gather data indicative of the displacement of the tamping surface on the tamping path;

a controller operatively connected to the metering device and the tamping assembly and adapted to iteratively:

(a) meter a dose of ground coffee into the filter basket with the metering device based on a metering parameter value;
(b) determine an actual tamp height value indicative of an actual tamp height of tamped coffee in the filter basket upon application of a tamping pressure by the tamping assembly based on the displacement of the tamping surface on the tamping path;
(c) calculate the difference between the actual tamp height value and a target tamp height value corresponding to a predetermined target amount of coffee required;
(d) if the difference between the actual tamp height value and the target tamp height value indicates the actual amount of coffee in the filter basket is less that the target amount of coffee in the filter basket;

adjust the metering parameter value and reperform steps (a) to (d).

C47. The machine of clause C46 wherein the metering parameter is temporal, and the metering parameter value is a time period.
C48. The method of clause C47 wherein the metering parameter is dosing time.
C49. The method of clause C47 wherein the metering parameter is grinder activation time.
C50. The method of clause C48 wherein the step of adjusting the metering parameter value is based on the difference between the actual temp height value and the target temp height value for a time period indicated by the metering parameter value used in a prior iteration of steps (a), (b) and (c).
C51. A tamping device comprising:

a body having a longitudinal axis and comprising a peripheral side wall extending upwardly from a base wall, the base wall wherein a bottom exterior surface of the base wall provides a tamping surface orthogonal to the longitudinal axis, and an internal bore vertically aligned with the longitudinal axis;
a tamping piston slidably mounted within the bore for movement along a tamping path aligned with the cylinder axis between a raised position and a striking position in abutment with a striking stop on the body;
a release mechanism for biasing the piston toward the raised position over an upper portion of the tamping path between the raised position and a release position and allowing the piston to travel substantially freely along a lower portion of the tamping path between the release position and the striking position; and
a charging assembly connected to the piston comprising a resilient charging member for storing a striking load and a charging handle for applying a charging force upon the piston to charge the charging member with said striking load and to move the piston between the raised position at the release position whereby the striking load is released to act upon the piston causing the piston to move to the striking position.

C52. The tamping device of clause C51 wherein the release mechanism comprises a track and track follower biased into engagement with the track.

C53. The tamping device of clause C51 wherein the track comprises a first portion and a second and wherein the follower engages the first portion of the track when the piston is between the raised position and the release position, and wherein the follower engages the second portion of the track when the piston is between the release position and the striking position.

C54. The tamping device of clause C52 or C53 wherein the follower is urged into engagement with the track at an acute angle along the first portion of the track so as to bias the piston toward the raised position and wherein the follower is urged into engagement with the track normal to the track along the second portion of the track so as to allow the piston to travel substantially freely.

C55.The tamping device of any one of clauses C52 to C54 wherein the track is disposed on the piston and the follower is carried by the body.

Although the technology has been described with reference to specific examples, it will be appreciated by those skilled in the art that the technology may be embodied in many other forms.

As used herein, unless otherwise specified the use of the ordinal adjectives "first", "second", "third", etc., to describe a common object, merely indicate that different instances of like objects are being referred to, and are not intended to imply that the objects so described must be in a given sequence, either temporally, spatially, in ranking, or in any other manner.

Reference throughout this specification to "one embodiment" or "an embodiment" or "example" means that a particular feature, structure or characteristic described in connection with the embodiment is included in at least one embodiment of the present technology. Thus, appearances of the phrases "in one embodiment" or "in an example" in various places throughout this specification are not necessarily all referring to the same embodiment or example, but may. Furthermore, the particular features, structures or characteristics may be combined in any suitable manner, as would be apparent to one of ordinary skill in the art from this disclosure, in one or more embodiments. Similarly, it should be appreciated that in the above description of exemplary embodiments of the technology, various features of the technology are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed technology requires more features than are expressly recited in each claim. Rather, as the following claims reflect, inventive aspects lie in less than all features of a single foregoing disclosed embodiment. Any claims following the Detailed Description are hereby expressly incorporated into this Detailed Description, with each claim standing on its own as a separate embodiment of this technology.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Spatially relative terms, such as "inner," "outer," "beneath," "below," "lower," "above", "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

Unless specifically stated otherwise, as apparent from the following discussions, it is appreciated that throughout the specification discussions utilizing terms such as "processing," "computing," "calculating," "determining" or the like, refer to the action and/or processes of a microprocessor, controller computer or computing system, or similar electronic computing device, that manipulates and/or transforms data.

Furthermore, while some embodiments described herein include some but not other features included in other embodiments, combinations of features of different embodiments are meant to be within the scope of the technology, and form different embodiments, as would be understood by those in the art. For example, in the following claims, any of the claimed embodiments can be used in any combination.

Thus, while there has been described what are believed to be the preferred embodiments of the technology, those skilled in the art will recognize that other and further modifications may be made thereto without departing from; the spirit of the technology, and it is intended to claim all such changes and modifications as fall within the scope of the technology.

While the present technology has been disclosed with reference to particular details of construction, these should be understood as having been provided by way of example and not as limitations to the scope or spirit of the technology.

## Claims

1. A device (10) for packing ground coffee in a coffee filter basket (100), the device (10) comprising:

   a dock (12) for receiving the filter basket (100) to be packed with ground coffee; and
   an agitator (14) associated with the dock (12) to agitate the filter basket (100) and thereby distribute the ground coffee within the filter basket (100).

2. The device (10) of claim 1, wherein the agitator (14) comprises a vibrator having a vibrating member connected to the dock (12).

3. The device (10) of claim 2, wherein the vibrating member comprises an eccentric rotating mass vibrator.

4. The device (10) of claim 2 or 3, wherein the vibrator comprises a motor (20) for driving the vibrating member though an off-center coupling (22), preferably wherein the motor (20) includes a vertically-orientated drive shaft (26).

5. The device (10) of claim 4, wherein the off-center coupling (22) comprises a cam (24) connected to the drive shaft (26) driven by the motor (20).

6. The device (10) of claim 5, wherein the off-center coupling (22) comprises a bearing (28) disposed between the cam (24) and the dock (12) to allow free rotation of the cam (24) with respect to the dock (12).

7. The device (10) of any one of claims 2 to 6, wherein the vibrator is configured to agitate the filter basket (100) on a generally horizontal plane.

8. The device (10) of any one of claims 2 to 7, wherein the vibrator is configured to generate vibrations having an amplitude of between around 0.1mm and 1mm, preferably around 0.25mm.

9. The device (10) of any one of claims 2 to 8, wherein the vibrator is configured to generate vibrations having a frequency of between around 2000 rpm and 5000 rpm, preferably around 3500 rpm.

10. The device (10) of any one of the preceding claims, wherein the agitator (14) comprises a linear actuator.

11. The device (10) of any one of the preceding claims, wherein the agitator (14) comprises an electromechanical solenoid.

12. The device (10) of any one of the preceding claims, further including a grinder for grinding coffee beans and directing ground coffee into the filter basket (100) when the filter basket (100) is located in the dock (12).

13. The device (10) of any one of the preceding claims, further including a coffee tamping assembly (230) for tamping coffee in the filter basket (100), preferably wherein the filter basket (100) is a filter basket of a coffee machine portafilter (102).

14. The device (10) of claim 13. wherein the dock (12) and portafilter (102) include complementary bayonet formations for securing the portafilter (102) to the dock (12).

15. The device (10) of claim 13. wherein the dock (12) comprises a platform and the dock (12) and the portafilter (102) include complementary formations for securing the portafilter (102) to the platform.

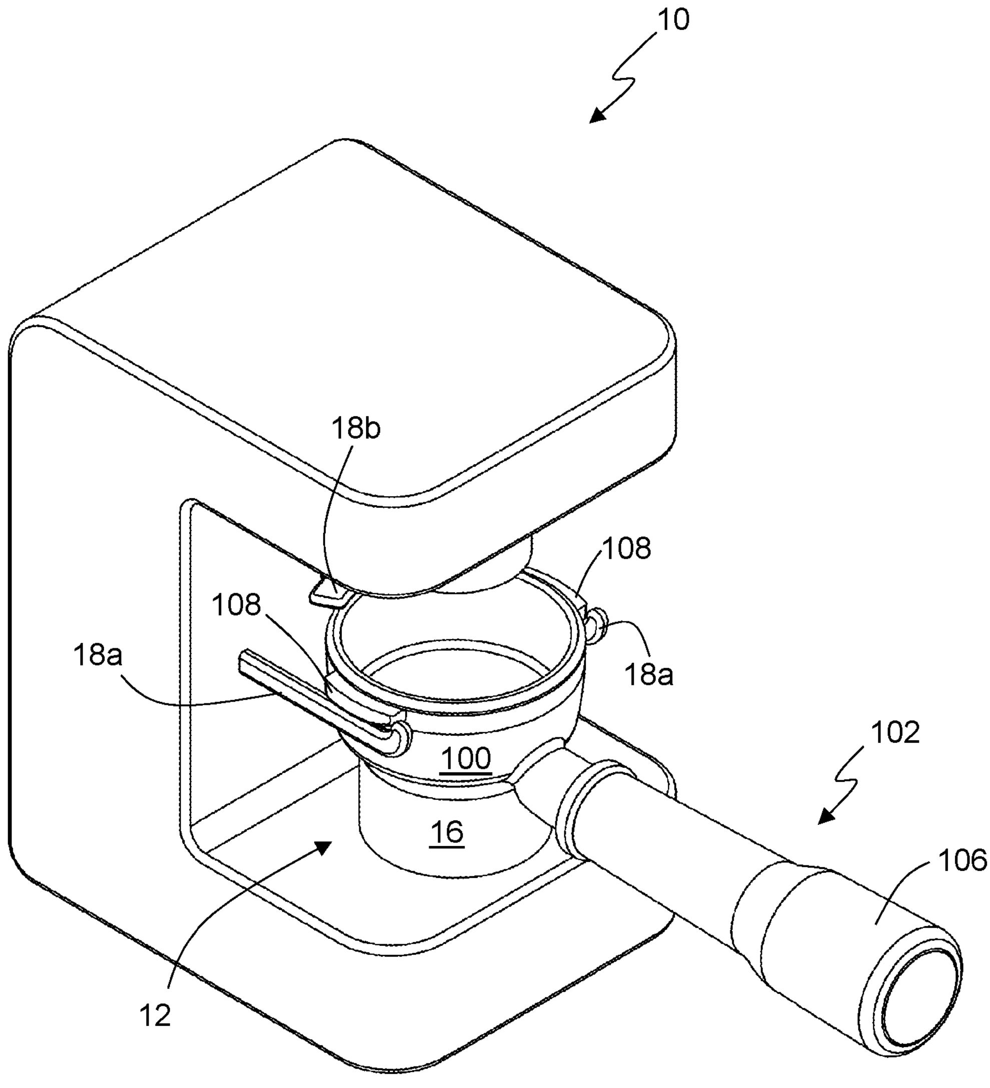


Figure 1

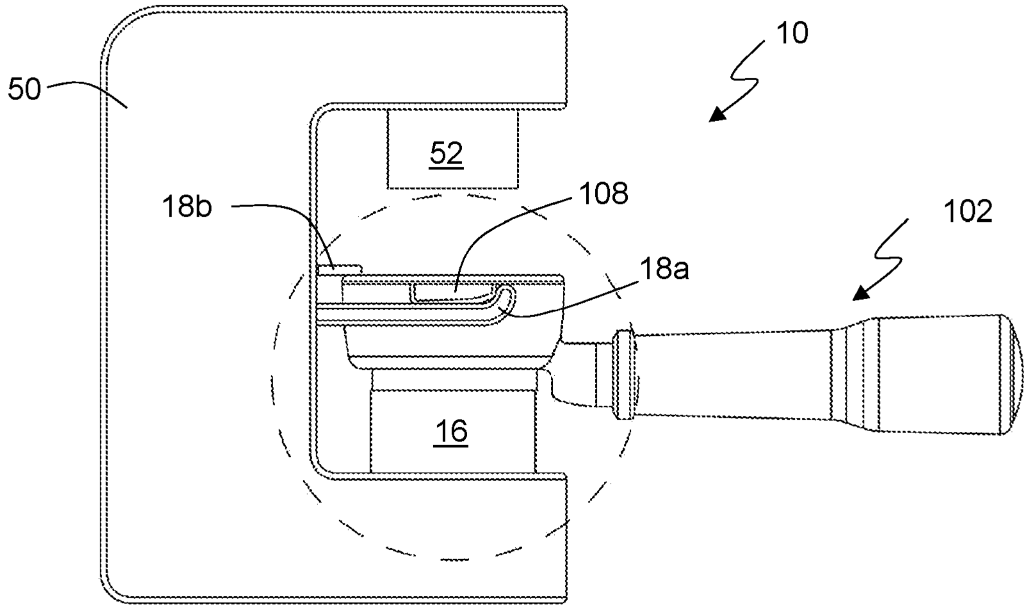


Figure 2a

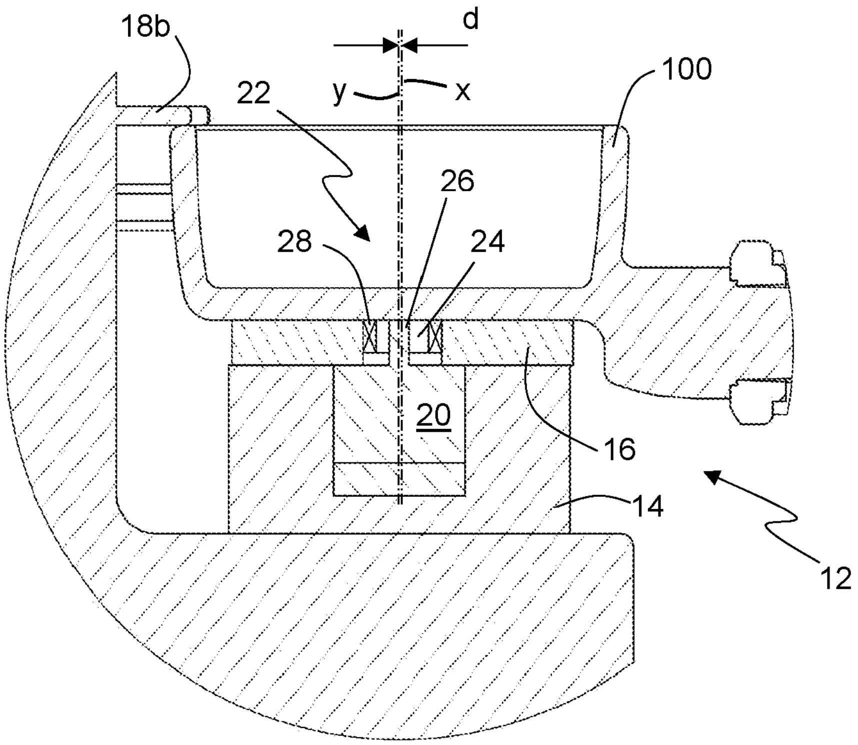


Figure 2b

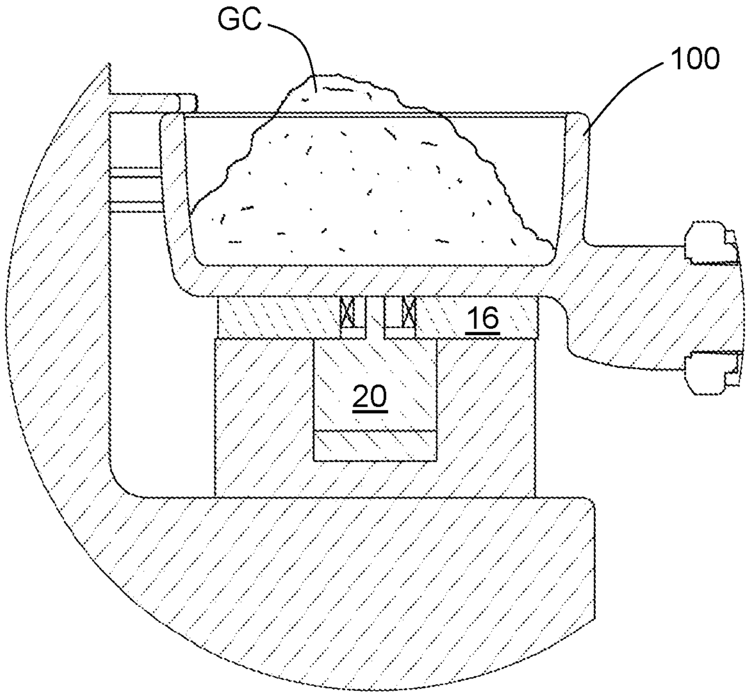


Figure 2c

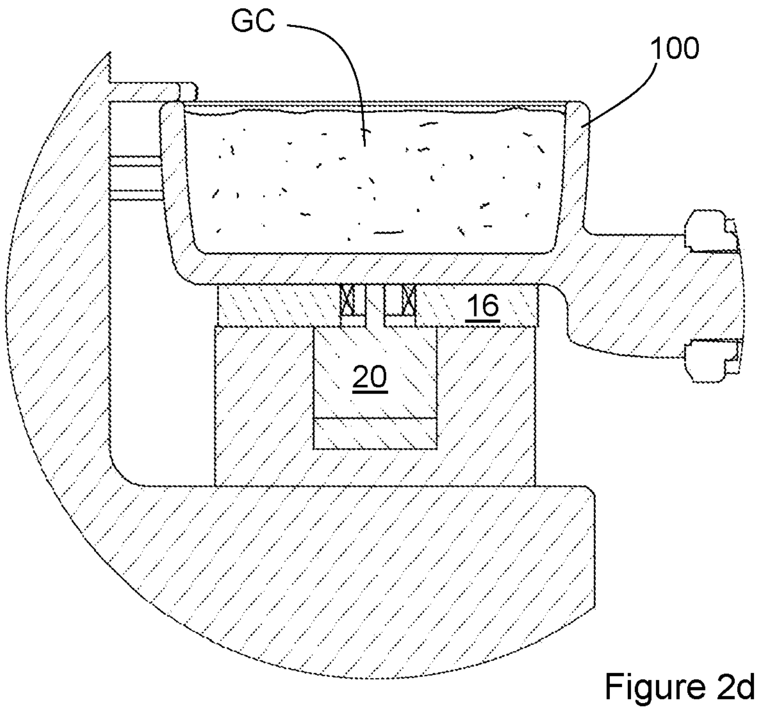


Figure 2d

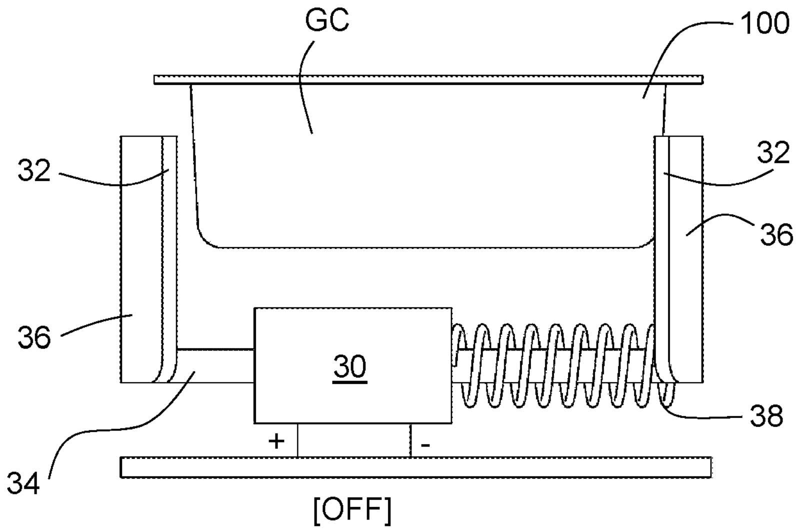


Figure 3a

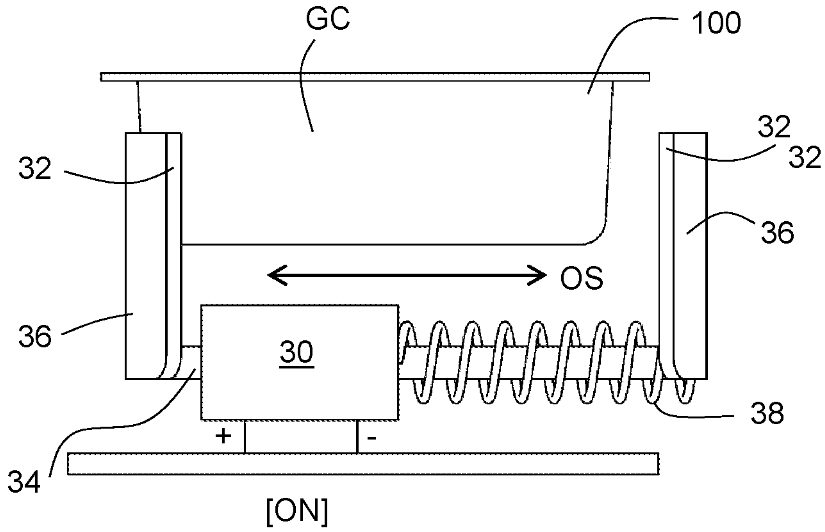


Figure 3b

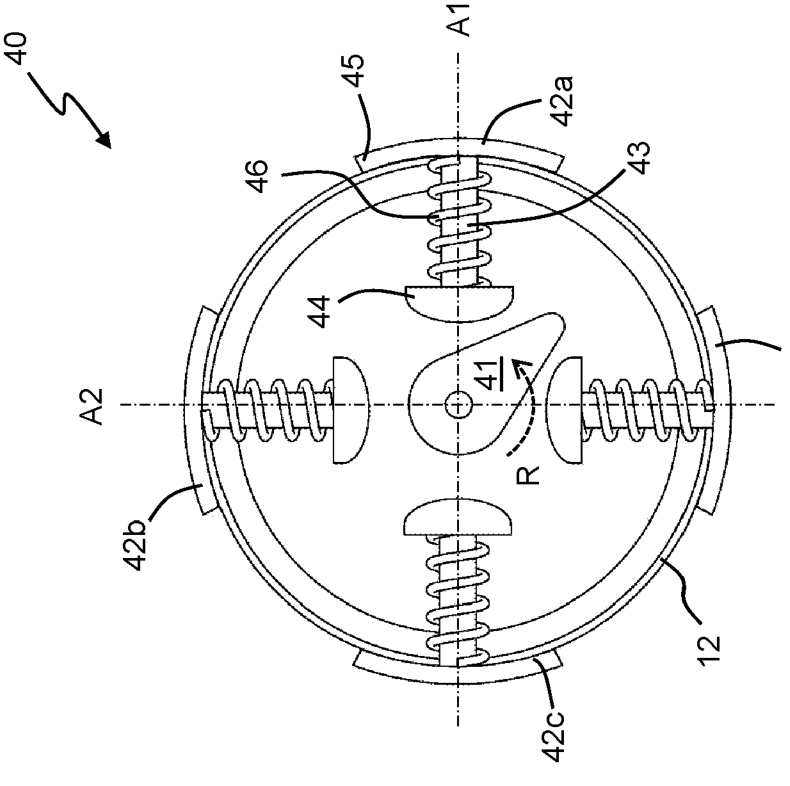

Figure 4a

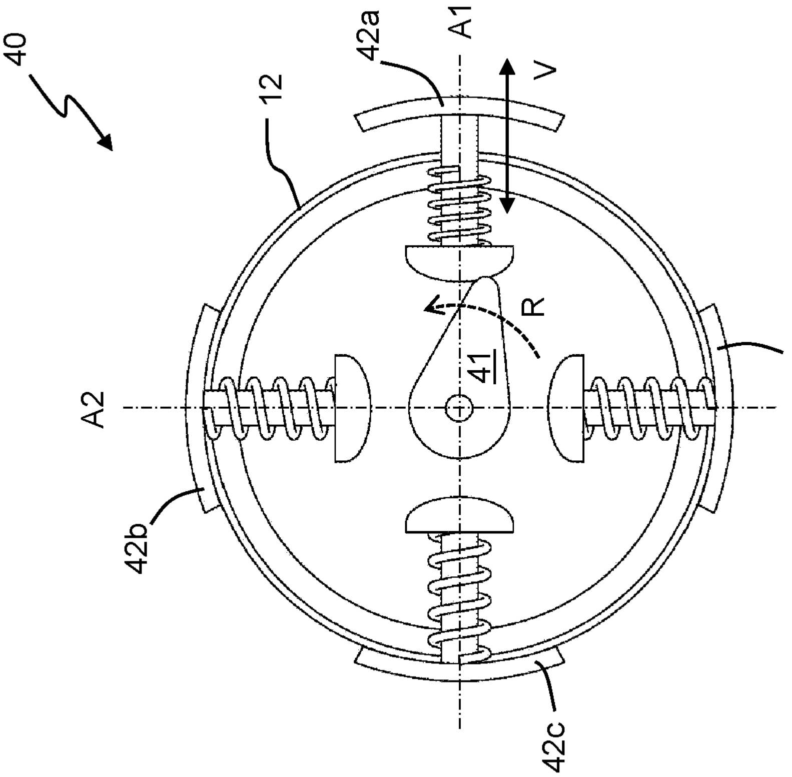

Figure 4b

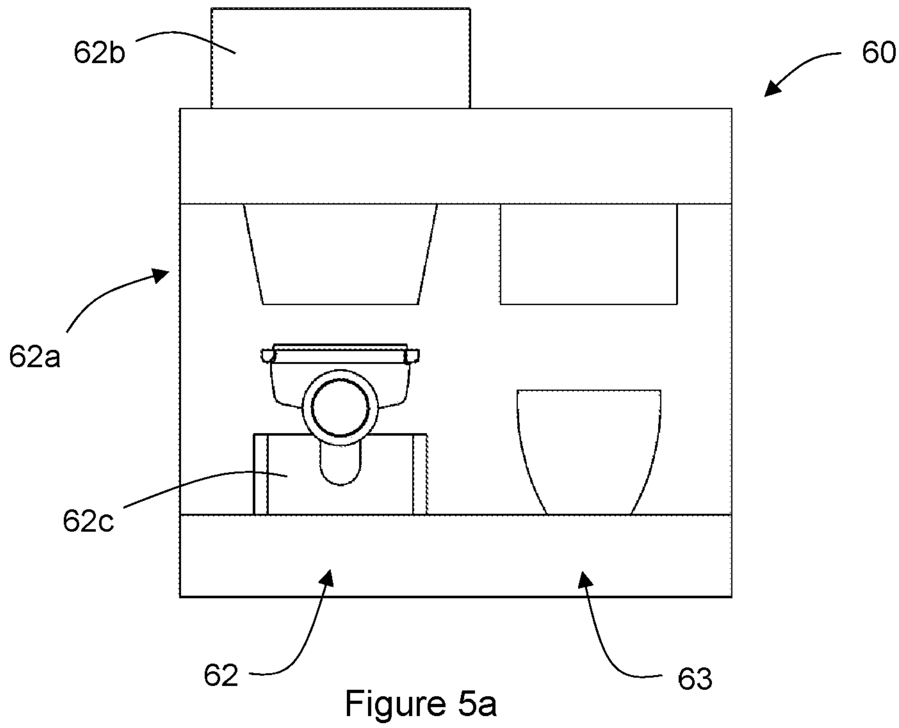

Figure 5a

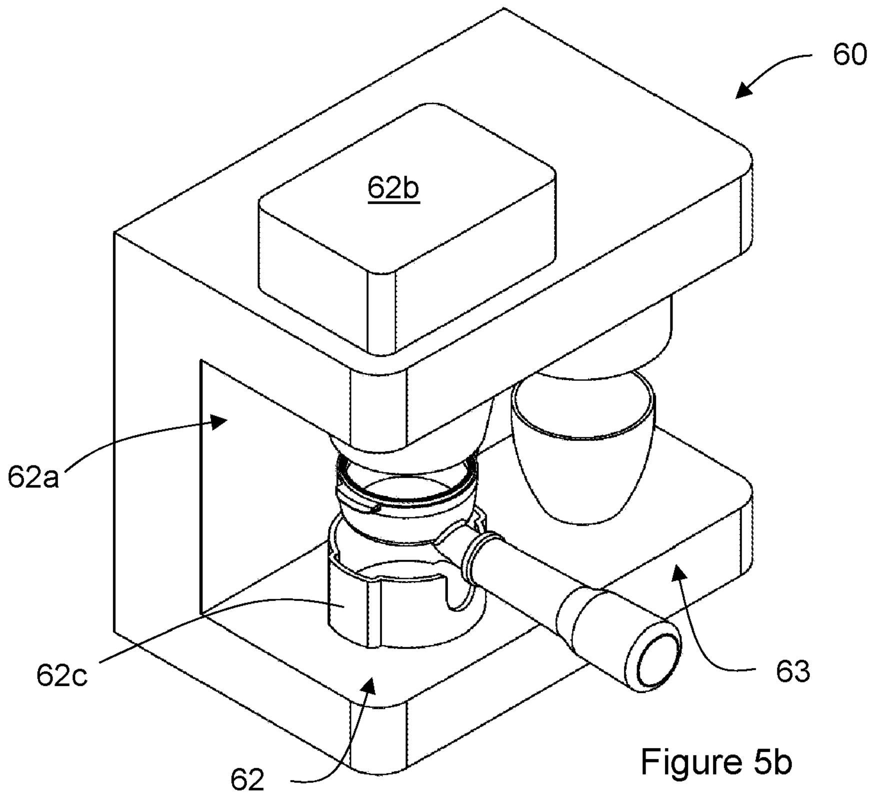

Figure 5b

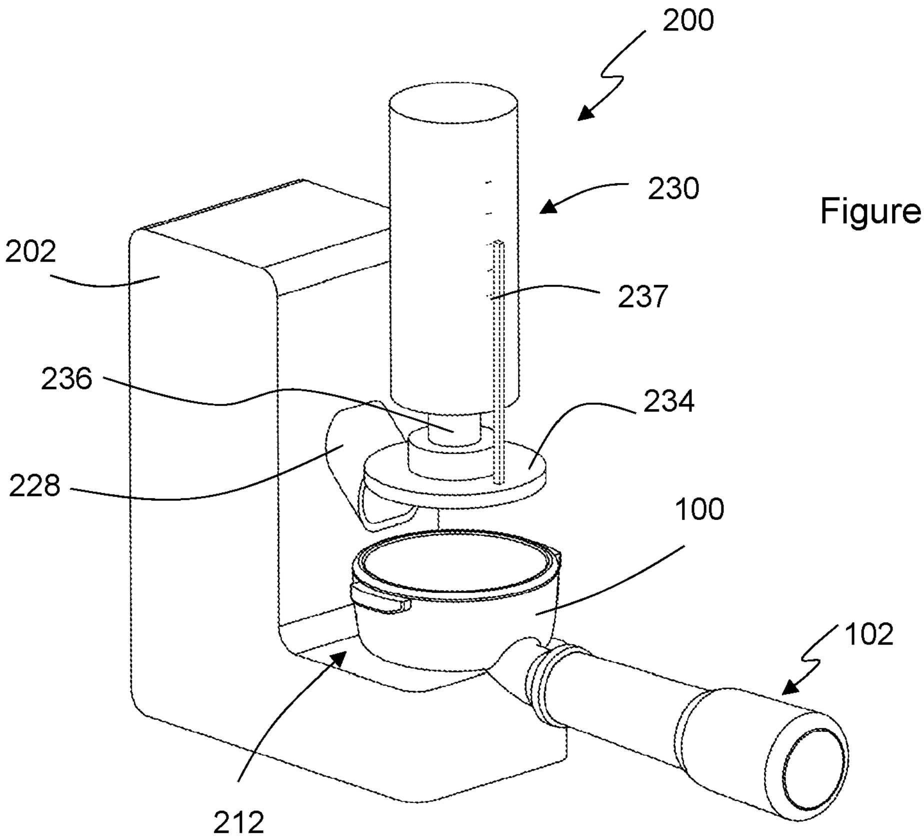


Figure 6

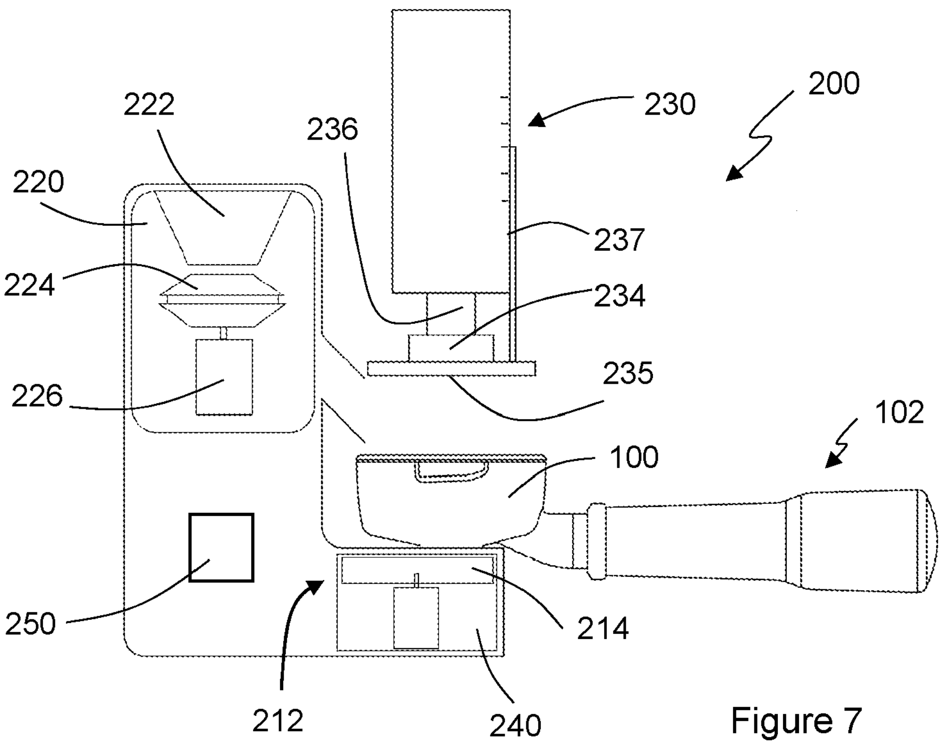


Figure 7

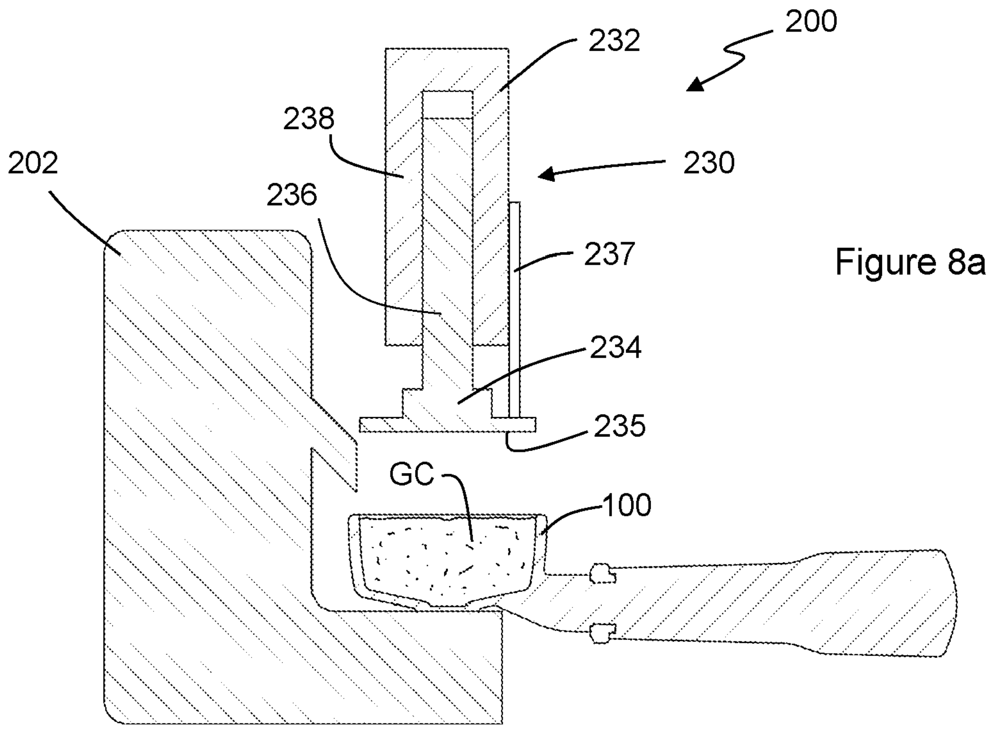


Figure 8a

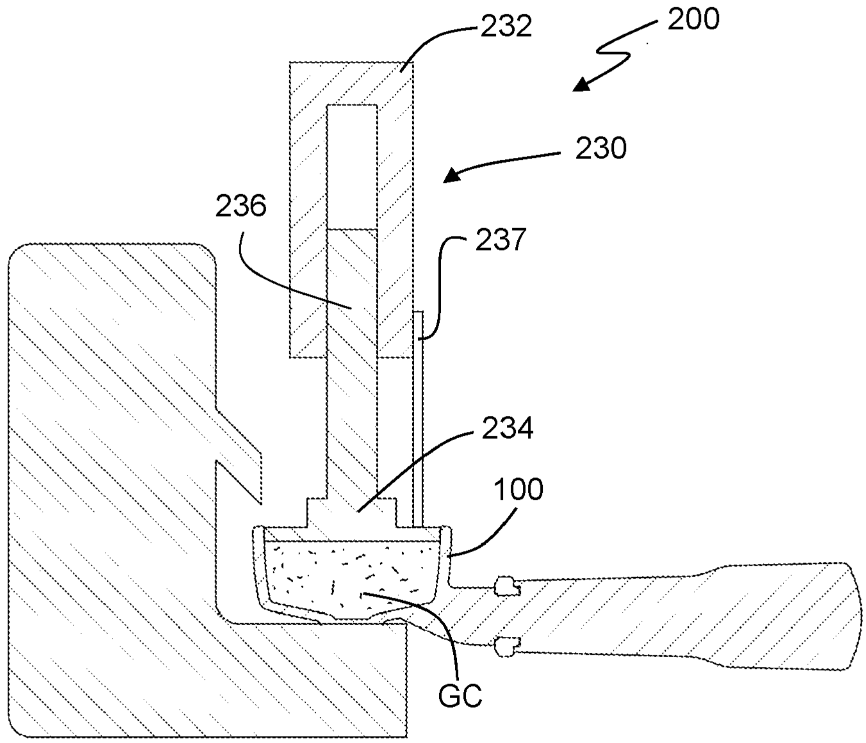


Figure 8b

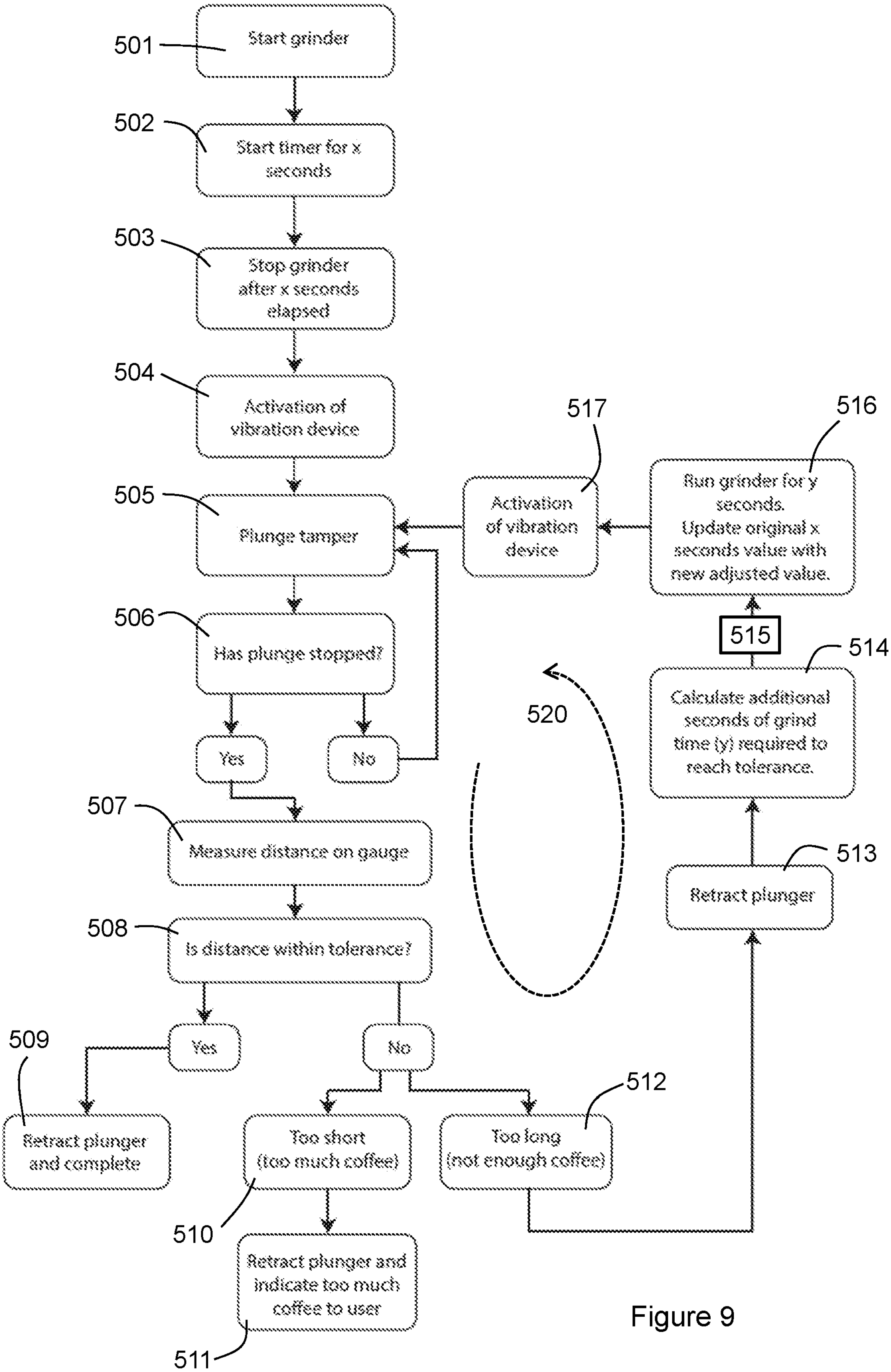
501
Start grinder
502
Start timer for x seconds
503
Stop grinder after x seconds elapsed
504
Activation of vibration device
505
Plunge tamper
506
Has plunge stopped?
Yes
No
507
Measure distance on gauge
508
Is distance within tolerance?
Yes
No
509
Retract plunger and complete
Too short (too much coffee)
510
Too long (not enough coffee)
512
Retract plunger and indicate too much coffee to user
511
Retract plunger
513
Calculate additional seconds of grind time (y) required to reach tolerance.
514
515
Run grinder for y seconds. Update original x seconds value with new adjusted value.
516
Activation of vibration device
517
520

Figure 9

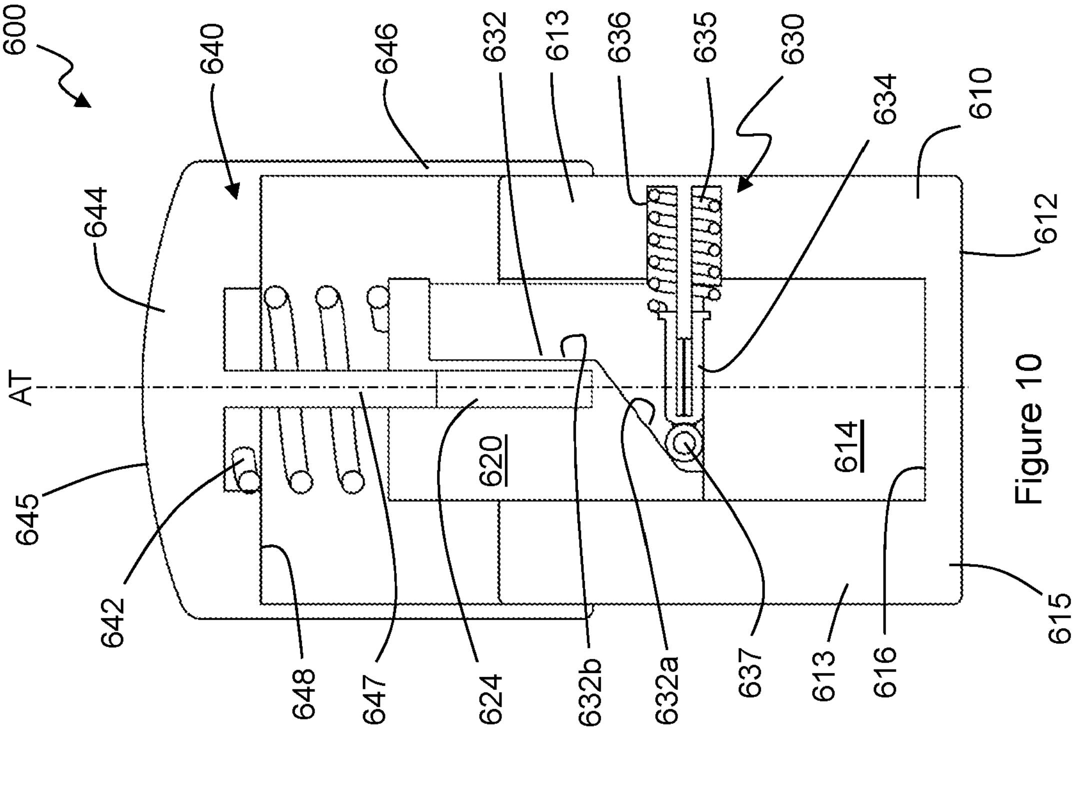


Figure 10

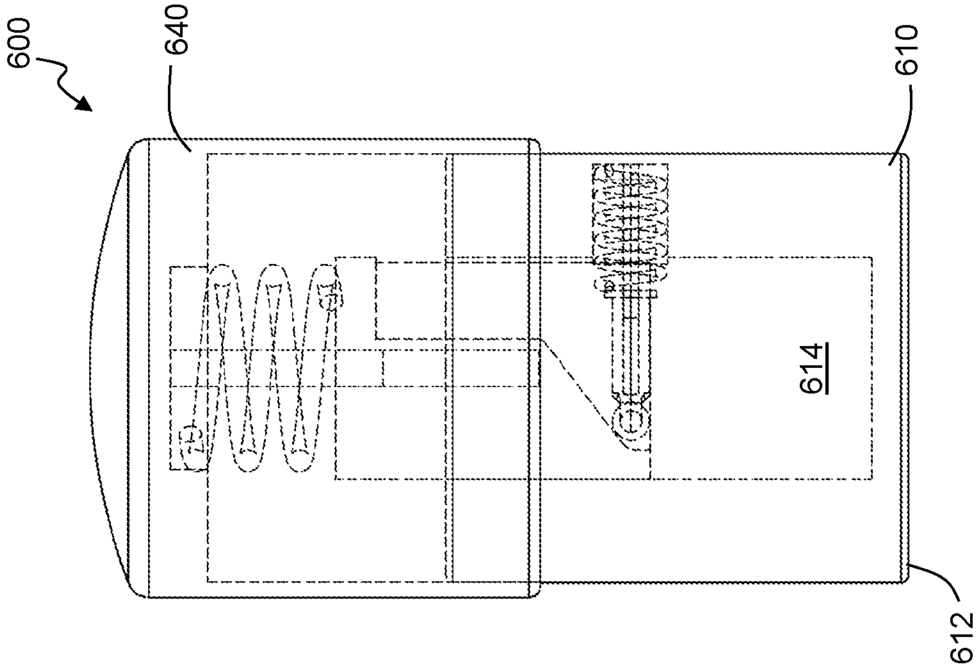


Figure 11

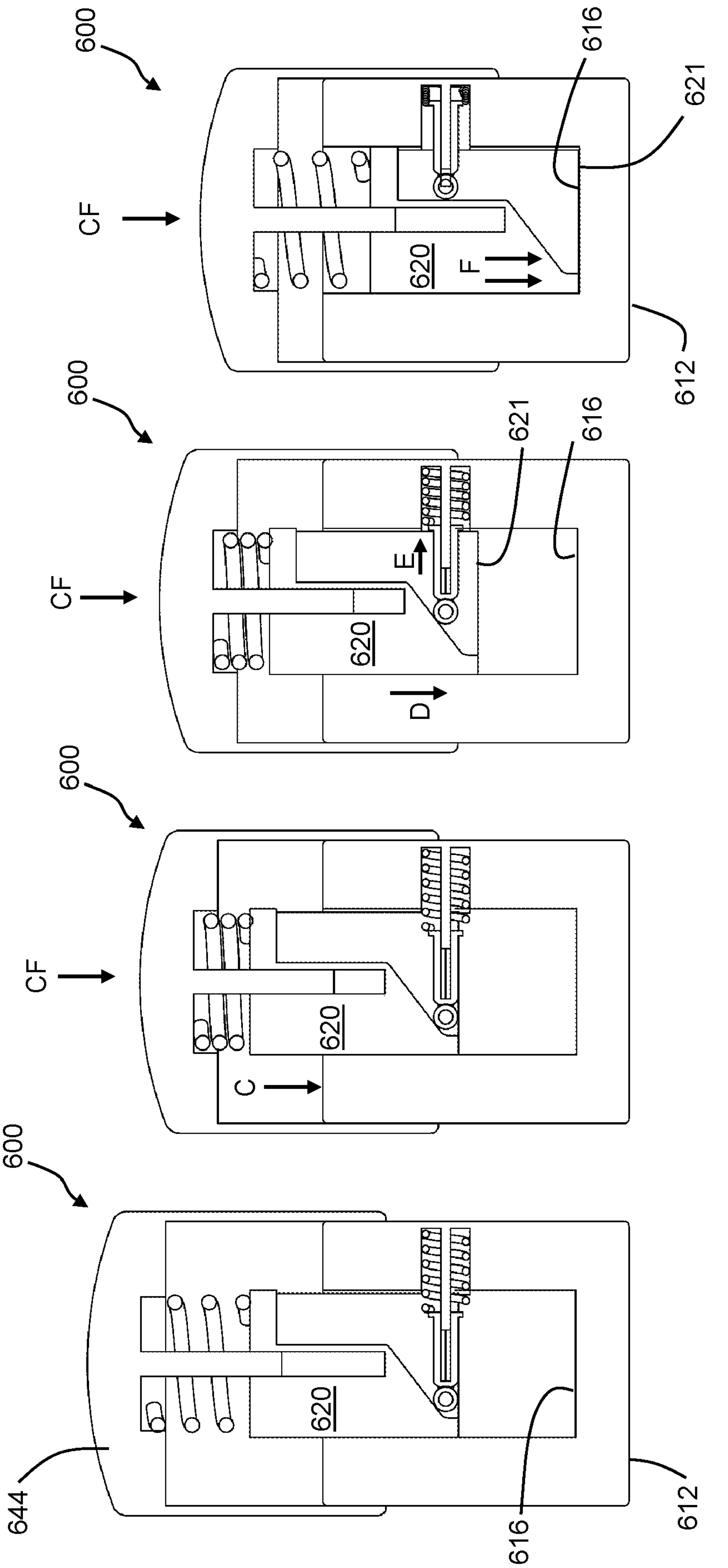


Figure 12a

Figure 12b

Figure 12c

Figure 12d

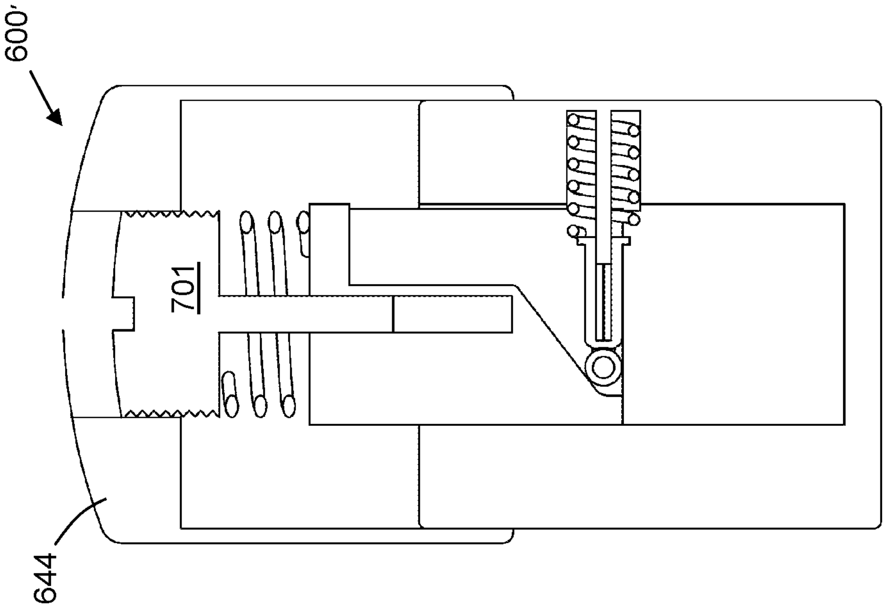


Figure 13b

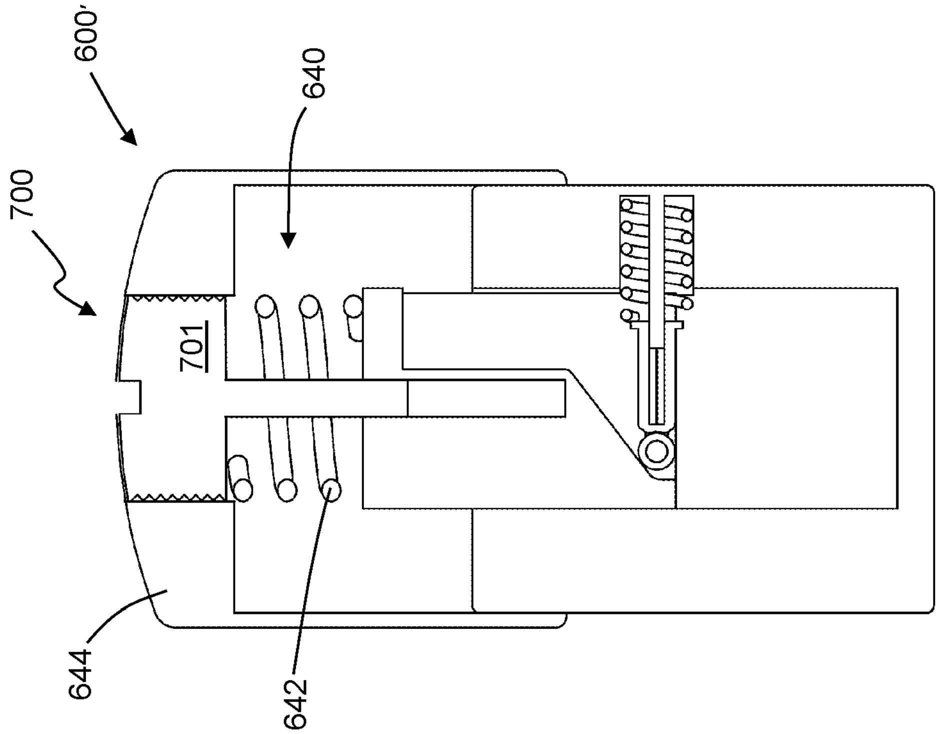


Figure 13a

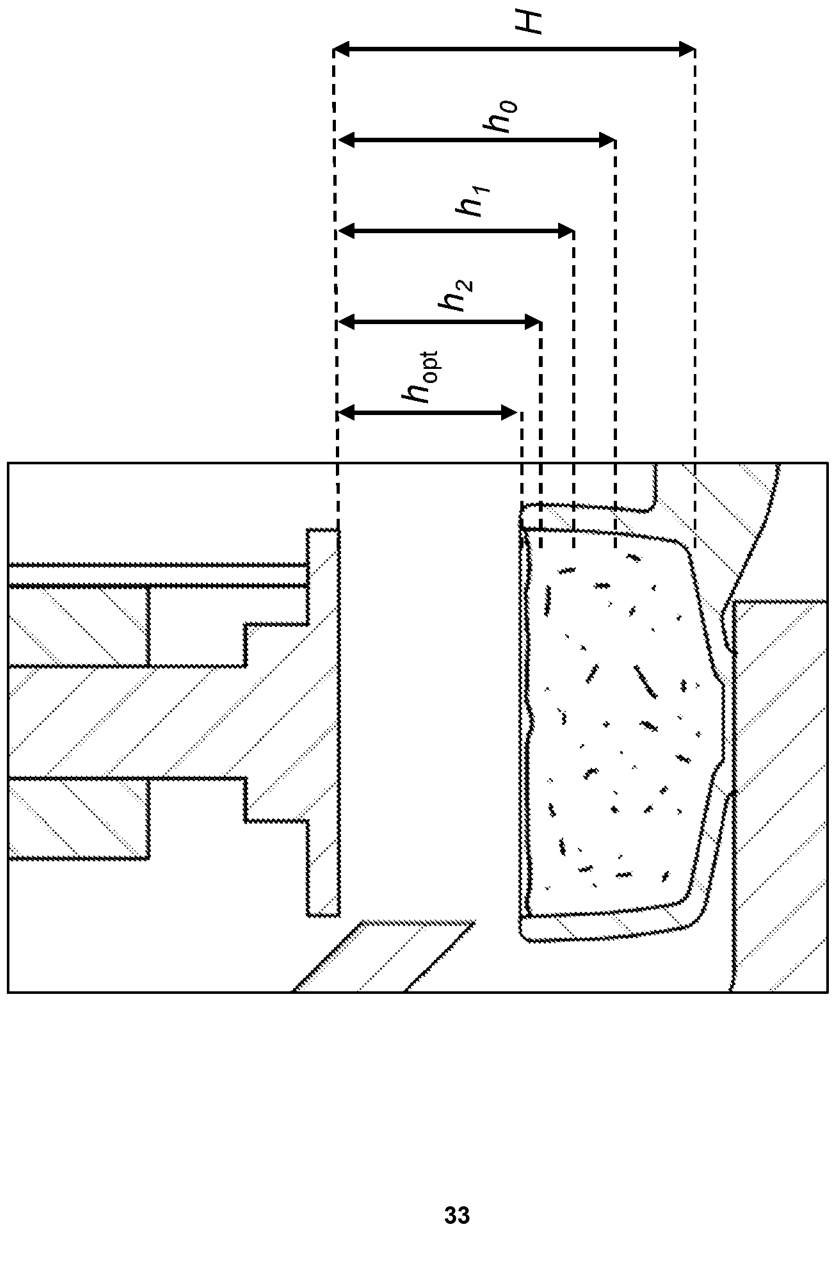


Figure 14

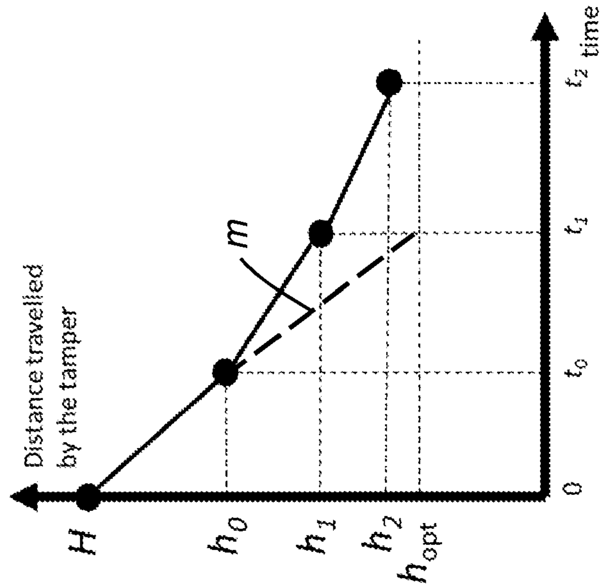


Figure 15

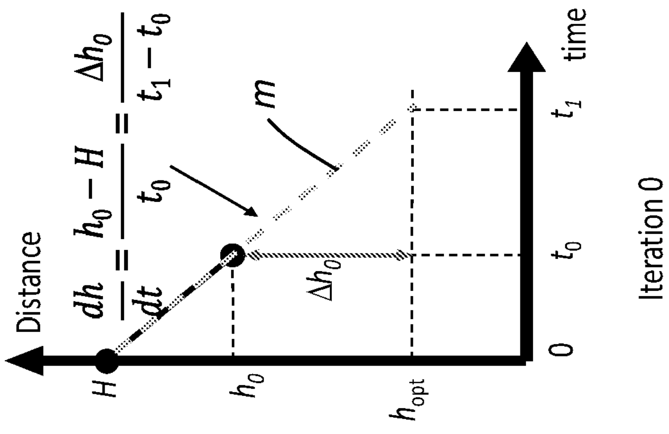


Figure 16a

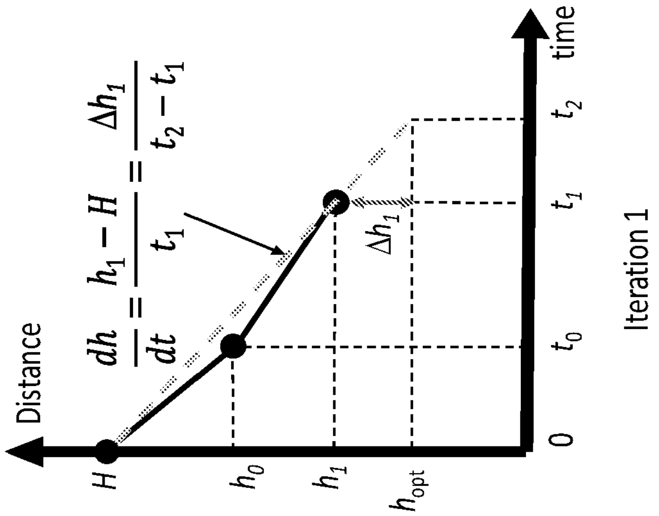


Figure 16b

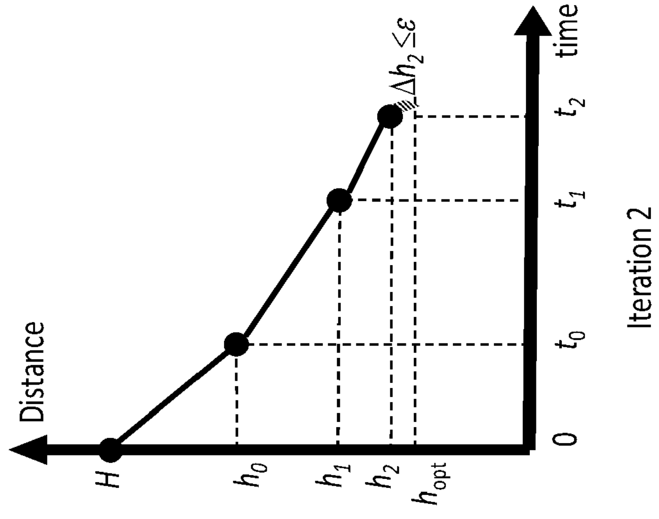


Figure 16c

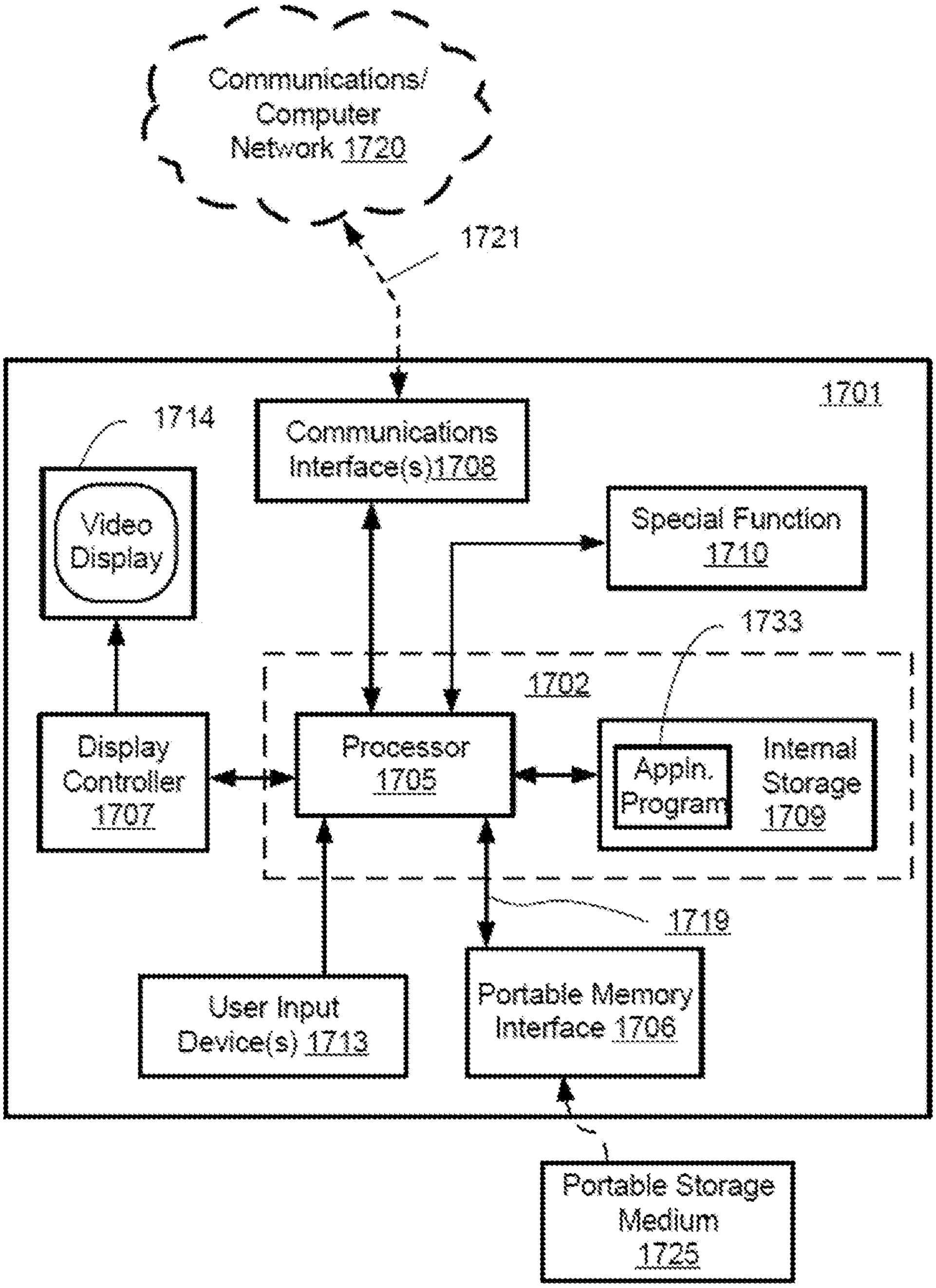
Communications/
Computer
Network 1720
1721
1701
1714
Video
Display
Communications
Interface(s)1708
Special Function
1710
1733
1702
Display
Controller
1707
Processor
1705
Appln.
Program
Internal
Storage
1709
1719
User Input
Device(s) 1713
Portable Memory
Interface 1706
Portable Storage
Medium
1725

Figure 17a

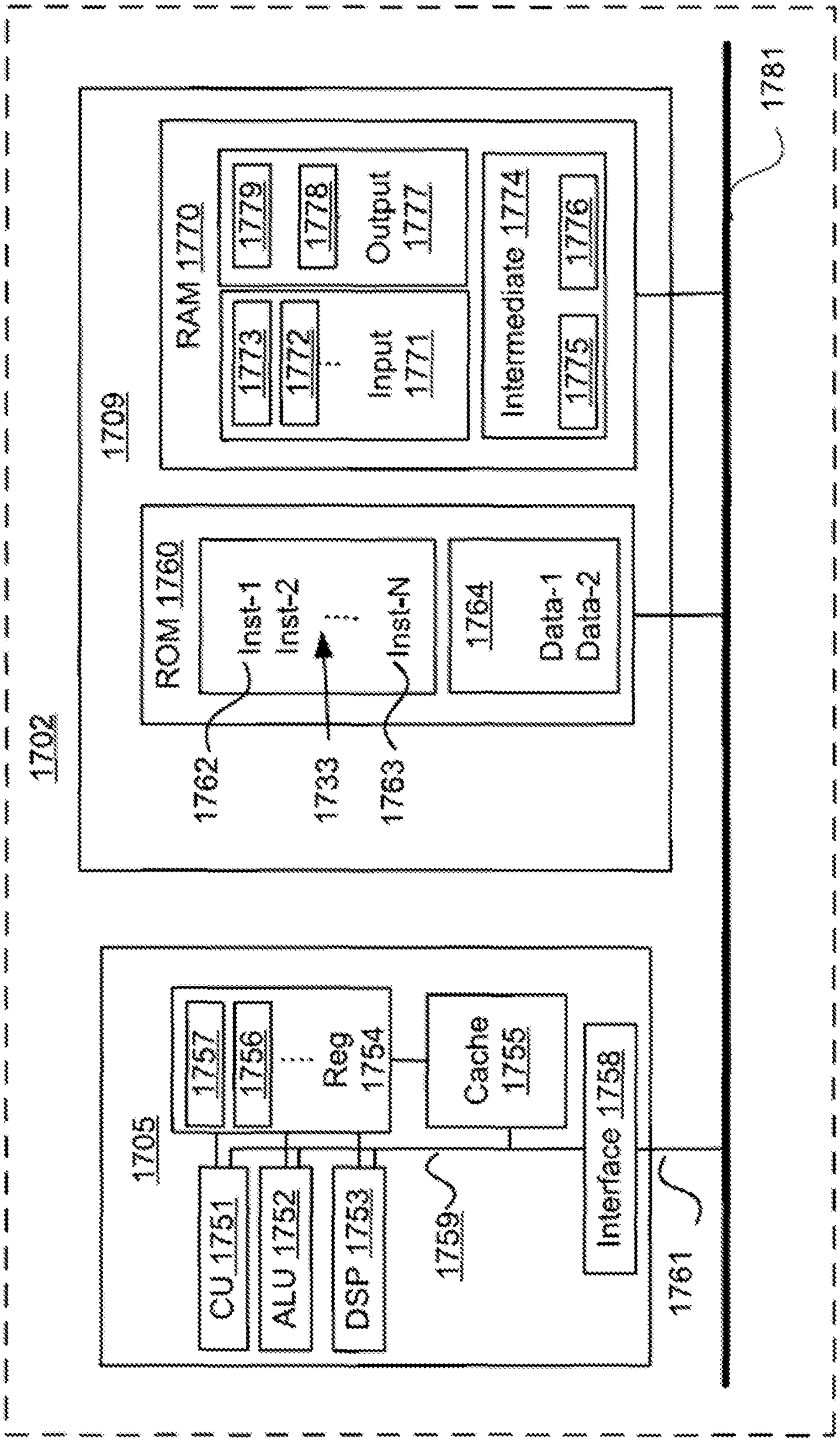
1702
1709
RAM 1770
1773
1772
Input 1771
1779
1778
Output 1777
Intermediate 1774
1775
1776
ROM 1760
Inst-1
Inst-2
Inst-N
1764
Data-1
Data-2
1762
1733
1763
1781
1705
CU 1751
ALU 1752
DSP 1753
1757
1756
Reg 1754
Cache 1755
Interface 1758
1759
1761

Figure 17b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- AU 2019902301
- WO 2014165905 A
- US 7992486 B
- US 8240244 B